# EUROPEAN PATENT APPLICATION

(11) **EP 4 628 366 A1**
(43) Date of publication of application: **08.10.2025**
(21) Application number: 23896203.9
(22) Date of filing: 14.09.2023
(51) Int. Cl.: B60R 16/023, G06F 21/62, G06F 21/60, G06Q 10/00

(54) **VEHICLE CONTROL METHOD, VEHICLE CONTROL SYSTEM, AND RELATED DEVICE**

(30) Priority: 30.11.2022 CN 202211521914
(71) Applicant: Shenzhen Yinwang Intelligent Technologies Co., Ltd., Shenzhen, Guangdong 518129 (CN)
(72) Inventor: ZHOU, Yang, Shenzhen, Guangdong 518129 (CN); CHENG, Nan, Shenzhen, Guangdong 518129 (CN)
(74) Representative: Maiwald GmbH
(86) International application number: PCT/CN2023/118729
(87) International publication number: WO 2024/114046

(57) **Abstract**

Embodiments of this application disclose a vehicle control method, a vehicle control system (2200), and a related device, to avoid leakage of user data in a maintenance process, so that privacy information of a user is protected. The method in the embodiments of this application includes: determining that a vehicle is in a maintenance mode; and when the vehicle is in the maintenance mode, controlling data access space of the vehicle to be maintenance data space, where the maintenance data space is isolated from user data space in which user data is stored.

## Description

This application claims priority to Chinese Patent Application No. CN202211521914.3, filed with the China National Intellectual Property Administration on November 30, 2022 and entitled "VEHICLE CONTROL METHOD, VEHICLE CONTROL SYSTEM, AND RELATED DEVICE", which is incorporated herein by reference in its entirety.

### TECHNICAL FIELD

This application relates to the field of computer technologies, and in particular, to a vehicle control method, a vehicle control system, and a related device.

### BACKGROUND

With development of science and technology, an intelligent network of vehicles is gradually deepened. An intelligent head unit is installed on a vehicle to obtain a comprehensive system that integrates functions such as environment sensing, planning and decision-making, and assistant driving. The system uses technologies such as computer, modern sensing, and artificial intelligence in combination.

In the head unit of the vehicle, a large amount of user data is stored, and various functions are provided. However, during vehicle maintenance, these functions may have risks and inconvenience, affecting user experience.

### SUMMARY

This application provides a vehicle control method, a vehicle control system, and a related device. In the vehicle control method, a maintenance mode of the vehicle is set. When the vehicle enters the maintenance mode, current data access space is set as maintenance data space, and the maintenance data space is isolated from user data space, so that privacy information of a user is protected.

A first aspect of this application provides a vehicle control method. The method is applied to a head unit and includes:

The head unit determines that a vehicle is in a maintenance mode. When the vehicle is in the maintenance mode, the head unit may control data access space of the vehicle to be maintenance data space, where the maintenance data space is isolated from user data space in which user data is stored. In other words, when the vehicle is in the maintenance mode, the head unit enables a data isolation function. Data space isolation means that an unauthorized user is not allowed to access the user data space. The unauthorized user is a user who does not log in to a current account, for example, maintenance personnel.

It can be learned from the foregoing technical solutions that this application has the following advantages.

In the maintenance mode, the data access space is controlled to be the maintenance data space, and the maintenance data space is isolated from the user data space, to prevent leakage of the user data stored in the user data space, protect user privacy, avoid impact of the maintenance data on the user data, and improve user experience.

In a possible implementation of the first aspect, when the vehicle enters the maintenance mode, the vehicle or the head unit of the vehicle may be started or restarted. In this process, the maintenance data space is established, so that the maintenance data space is created after the vehicle or the head unit is started or restarted.

In this embodiment of this application, the maintenance data space is created in a process of starting or restarting the vehicle or the head unit, so that the maintenance data space is completely isolated from the user data space, to further prevent the user data from being accessed in a process of accessing the maintenance data space, so that user privacy is better protected.

In a possible implementation of the first aspect, the maintenance data space may alternatively be preset data space. In this case, the data access space can be controlled to be the maintenance data space without restarting the head unit or the vehicle.

In this embodiment of this application, in a current maintenance process, the maintenance data space may be determined without starting or restarting the vehicle or the head unit, so that maintenance steps are simplified and complexity of the maintenance process is reduced. In addition, the maintenance data space has a plurality of sources, thereby enriching application scenarios and implementations of the technical solutions of this application, and improving flexibility of the technical solutions of this application.

In a possible implementation of the first aspect, before the data access space of the vehicle is controlled to be the maintenance data space, the head unit can further obtain a first operation instruction for a vehicle-mounted screen, status information of the vehicle, and maintenance space information. The first operation instruction indicates to enable a data isolation function. When the status information of the vehicle meets a status condition, and the data space information indicates that the maintenance data space exists, the head unit controls, in response to the first operation instruction, the data access space of the vehicle to be the maintenance data space.

In this embodiment of this application, when determining that the status information of the vehicle meets the status condition and maintenance data space information exists, the head unit enables, in response to the first operation instruction for the vehicle-mounted screen, the data isolation function. Confirmation from a plurality of perspectives not only prevents a misoperation, but also improves security and stability.

In a possible implementation of the first aspect, before the head unit determines that the vehicle is in the maintenance mode, if the vehicle is in a non-factory mode, the head unit obtains, from a cloud, a first instruction that indicates the vehicle to enter the maintenance mode, and obtains the status information of the vehicle. When the status information of the vehicle meets the status condition, the head unit controls, according to the first instruction, the vehicle to enter the maintenance mode. That the vehicle is in the non-factory mode means that the vehicle has been produced and enters a scenario, for example, delivery or exhibition. In this case, the head unit of the vehicle stores the user data. The user data herein includes vehicle owner data or data generated by another person in a process of operating the vehicle, for example, in a process of setting a default air conditioner temperature or a seat height of the vehicle. The first instruction may be an instruction obtained after the cloud successfully checks a maintenance work order based on the work order entered by an operator on a cloud service platform, or the first instruction is an instruction obtained by the cloud by using a reserved interface of a cloud service platform. This is not specifically limited herein. If the work order passes the check, the work order exists in a work order management system on the cloud and has been confirmed. If the vehicle is in a factory mode, the head unit obtains the status information of the vehicle. When the status information of the vehicle meets the status condition, the head unit controls, in response to a second operation instruction for the vehicle-mounted screen, the vehicle to enter the maintenance mode, where the second operation instruction indicates to enter the maintenance mode. That the vehicle is in the factory mode means that the vehicle has not been delivered. In this case, the vehicle is not bound to the cloud and a client, and does not receive information from the cloud or the client.

In this embodiment of this application, in different vehicle modes, manners in which the head unit controls the vehicle to enter the maintenance mode are different. This enriches application scenarios of the technical solutions of this application. In addition, when the vehicle is in the non-factory mode, the head unit controls, in response to the first instruction, the vehicle to enter the maintenance mode only when determining that the status information of the vehicle meets the status condition. This improves security and reliability. When the vehicle is in the factory mode, the head unit can control the vehicle to enter the maintenance mode without interacting with the cloud. This simplifies a process.

In a possible implementation of the first aspect, before the head unit controls, according to the first instruction, the vehicle to enter the maintenance mode, if the vehicle is in the non-factory mode, the head unit further sends a first verification code to the cloud, where the first verification code is used to request to enter the maintenance mode. The cloud checks the first verification code, and sends, to the head unit, a first check result corresponding to the first verification code. The head unit obtains the first check result from the cloud, and when the first check result indicates that the verification succeeds and the status information meets the status condition, controls, according to the first instruction, the vehicle to enter the maintenance mode.

In this embodiment of this application, when the vehicle is in the non-factory mode, the head unit determines, based on the first check result and the status information of the vehicle, whether to control, according to the first instruction, the vehicle to enter the maintenance mode. Confirmation from a plurality of perspectives can not only avoid a misoperation, but also improve security, prevent a vehicle status from being tampered with, and improve stability.

In a possible implementation of the first aspect, the status information includes motion status information, network status information, and system status information. That the status information of the vehicle meets a status condition includes: The motion status information indicates that the vehicle is in a static state, the network status information indicates that a network of the vehicle is normal, and the system status information indicates that a system of the vehicle is normal.

In this embodiment of this application, the status information of the vehicle includes information in a plurality of dimensions: a motion status, a system status, and a network status. It is ensured that entering the maintenance mode is triggered only when the vehicle is in the static state and both the system and the network are normal. This further improves security and reliability.

In a possible implementation of the first aspect, the maintenance data space is used to store maintenance data, and the head unit may further send the maintenance data to the cloud.

In this embodiment of this application, the head unit can send the maintenance data to the cloud, so that the cloud stores the maintenance data, and the user or the maintenance personnel can view the maintenance data, perform error correction, check, and the like. This improves practicability of the technical solution.

In a possible implementation of the first aspect, if the vehicle is in the factory mode, the head unit may control, in response to a third operation instruction for the vehicle-mounted screen, the vehicle to exit the maintenance mode, where the third operation instruction indicates to exit the maintenance mode. If the vehicle is in the non-factory mode, the head unit may obtain, from the cloud, a second instruction that indicates the vehicle to exit the maintenance mode, and control, according to the second instruction, the vehicle to exit the maintenance mode.

In this embodiment of this application, in different vehicle modes, manners in which the head unit controls the vehicle to exit the maintenance mode are different. This enriches application scenarios of the technical solutions of this application.

In a possible implementation of the first aspect, before the head unit controls, according to the second instruction, the vehicle to exit the maintenance mode, if the vehicle is in the non-factory mode, the head unit may send a second verification code to the cloud, where the second verification code is used to request to exit the maintenance mode. The cloud checks the second verification code, and sends, to the head unit, a second check result corresponding to the second verification code. The head unit obtains the second check result from the cloud, and when the second check result indicates that the verification succeeds, controls, according to the second instruction, the vehicle to enter the maintenance mode.

In this embodiment of this application, when the vehicle is in the non-factory mode, the head unit determines, based on the second check result, whether to control, according to the second instruction, the vehicle to exit the maintenance mode. This can effectively prevent the vehicle from exiting the maintenance mode by mistake caused by a misoperation, and further improve user experience.

In a possible implementation of the first aspect, when the vehicle exits the maintenance mode, the head unit deletes the maintenance data stored in the maintenance data space.

In this embodiment of this application, when the maintenance mode is exited, the local maintenance data of the head unit is deleted. This avoids a trouble caused by the maintenance data to the user, and further improves user experience.

In a possible implementation of the first aspect, the head unit sets an intelligent management function of the vehicle to a suspended state when the vehicle is in the maintenance mode. The head unit sets the intelligent management function to an available state when the vehicle exits the maintenance mode. The intelligent management function includes at least one of the following: a remote control function, an alarm function, an audio-visual entertainment function, a personalized configuration function, or an image capture function.

In this embodiment of this application, the head unit sets the intelligent management function of the vehicle to the suspended state, so that inconvenience caused by the intelligent management function when the vehicle is in the maintenance mode can be avoided. For example, the remote control function is set to the suspended state, to prevent a misoperation from causing personal injury to an operator in the vehicle, and improve security of the technical solutions of this application. The alarm function of the vehicle is set to the suspended state, to reduce unnecessary information transmission, and avoid a trouble caused to a user and a maintenance party.

In a possible implementation of the first aspect, when the vehicle is in the maintenance mode, if the vehicle is in the non-factory mode, the head unit may further send first notification information to the client, where the first notification information indicates to suspend use of an intelligent management function of the client. When the vehicle exits the maintenance mode, if the vehicle is in the non-factory mode, the head unit may further send second notification information to the client, where the second notification information indicates to enable the intelligent management function of the client. That the head unit sends the first notification information or the second notification information to the client may be: The head unit directly sends the first notification information or the second notification information to the client; or the head unit sends the first notification information or the second notification information to the cloud, and then the cloud forwards the first notification information or the second notification information to the client. This is not specifically limited herein.

In this embodiment of this application, when the vehicle is in the maintenance mode and is in the non-factory mode, the intelligent management function of the client may be set to the suspended state, so that inconvenience caused by a misoperation of the client is avoided. In addition, when the vehicle exits the maintenance mode, the head unit can restore, without user setting, a function that is suspended in the maintenance mode. This simplifies an operation of the user.

In a possible implementation of the first aspect, after the intelligent management function of the vehicle is set to the suspended state when the head unit is in the maintenance mode, if the vehicle is in the non-factory mode, the head unit may apply to the client for enabling the intelligent management function. Specifically, the head unit may send the first application information to the client, where the first application information indicates to enable the intelligent management function. If the client allows enabling of the intelligent management function, the head unit obtains first permission information from the client, and sets the intelligent management function to an available state based on the first permission information. The first application information or the first permission information may be directly transmitted between the client and the head unit, or may be forwarded by using the cloud. This is not specifically limited herein.

In this embodiment of this application, when the vehicle is in the maintenance mode and the intelligent management function of the vehicle is set to the suspended state by default, the intelligent management function can be restored at a request of the head unit to the client, so that an operator can easily determine whether a related function is successfully maintained. This further improves practicability of the technical solutions of this application.

In a possible implementation of the first aspect, after the intelligent management function of the vehicle is set to the suspended state, the head unit may obtain second application information from the client, where the second application information indicates to enable the intelligent management function; control the vehicle-mounted screen to display an application interface corresponding to the second application information; and set the intelligent management function to the available state in response to a fourth operation instruction for the vehicle-mounted screen, where the fourth operation instruction indicates to enable the intelligent management function.

In this embodiment of this application, when the vehicle is in the maintenance mode, and the intelligent management function of the vehicle is set to the suspended state by default, use of the intelligent management function may also be restored through application of the client, so that a vehicle owner learns of related maintenance information. This further improves practicability of the technical solutions of this application.

In a possible implementation of the first aspect, when the vehicle is in the maintenance mode and the vehicle is restarted, the restarted vehicle is controlled to be in the maintenance mode. Restarting the vehicle includes a process in which an entire vehicle component is powered off and then powered on.

In this embodiment of this application, when the vehicle is restarted when the vehicle is in the maintenance mode, the restarted vehicle can be controlled to be in the maintenance mode, so that incorrect exit of the maintenance mode is avoided, that is, inconvenience caused by incorrect exit of the maintenance mode is prevented.

In a possible implementation of the first aspect, when the vehicle is in the maintenance mode, the vehicle-mounted screen is controlled to display a maintenance interface; and when the vehicle exits the maintenance mode, the vehicle-mounted screen is controlled to display a user interface.

In this embodiment of this application, when the vehicle is in the maintenance mode, the vehicle-mounted screen may be controlled to display the maintenance interface, so that an operator can intuitively learn of a current status of the vehicle. This further improves user experience. When the maintenance mode is exited, the user interface can be returned to without user setting. This provides convenience for the user.

A second aspect of the embodiments of this application provides a vehicle control method, where the method is applied to a client, and the method includes:
when a vehicle is in a maintenance mode, obtaining first notification information from a cloud or a head unit, where the first notification information indicates that use of an intelligent management function of a client is suspended, and the intelligent management function includes at least one of the following: a remote control function, an alarm function, an audio-visual entertainment function, a personalized configuration function, or an image capture function; and setting the intelligent management function to a suspended state based on the first notification information.

In this embodiment of this application, the client sets the intelligent management function of the client to the suspended state, so that inconvenience caused by a misoperation of the intelligent management function on the client when the vehicle is in the maintenance mode can be avoided. For example, the remote control function is set to the suspended state, to prevent a misoperation from causing personal injury to an operator in the vehicle, and improve security of the technical solutions of this application. The alarm function of the vehicle is set to the suspended state, to reduce unnecessary information transmission, and avoid a trouble caused to a user and a maintenance party.

In a possible implementation of the second aspect, after setting the intelligent management function to the suspended state, the client can further obtain first application information from the head unit or the cloud, where the first application information indicates to enable the intelligent management function; and set the intelligent management function to an available state based on the first application information.

In this embodiment of this application, when the vehicle is in the maintenance mode and the intelligent management function of the vehicle is set to the suspended state by default, the intelligent management function can be restored at a request of the head unit to the client, so that an operator can easily determine whether a related function is successfully maintained. This further improves practicability of the technical solutions of this application.

In a possible implementation of the second aspect, after setting the intelligent management function to a suspended state, the client may further send second application information to the head unit or the cloud, where the second application information indicates to enable the intelligent management function; obtain permission information from the head unit or the cloud, where the permission information corresponds to the second application information; and set the intelligent management function to the available state based on the permission information.

In this embodiment of this application, when the vehicle is in the maintenance mode, and the intelligent management function of the vehicle is set to the suspended state by default, use of the intelligent management function may also be restored through application of the client, so that a vehicle owner learns of related maintenance information. This further improves practicability of the technical solutions of this application.

In a possible implementation of the second aspect, after the intelligent management function is set to the suspended state, when the vehicle exits the maintenance mode, the client obtains second notification information from the cloud or the head unit, where the second notification information indicates to enable the intelligent management function of the client; and set the intelligent management function to the available state based on the second notification information.

In this embodiment of this application, when the maintenance mode is exited, the client can restore, without user setting, a function suspended in the maintenance mode. This simplifies an operation of the user.

A third aspect of the embodiments of this application provides a vehicle control method, where the method is applied to a cloud and includes:
sending a first instruction to a head unit, where the first instruction indicates a vehicle to enter a maintenance mode and indicates to set an intelligent management function of the vehicle to a suspended state, and the first indication is an instruction obtained after the cloud successfully checks a maintenance work order, or an instruction obtained by using a reserved interface. The intelligent management function includes at least one of the following: a remote control function, an alarm function, an audio-visual entertainment function, a personalized configuration function, or an image capture function.

In this embodiment of this application, the first instruction sent by the cloud to a client indicates the vehicle to enter the maintenance mode and indicates to set the intelligent management function of the vehicle to the suspended state. This can avoid inconvenience caused by the intelligent management function when the vehicle is in the maintenance mode. For example, the remote control function is set to the suspended state, to prevent a misoperation from causing personal injury to an operator in the vehicle, and improve security of the technical solutions of this application. The alarm function of the vehicle is set to the suspended state, to reduce unnecessary information transmission, and avoid a trouble caused to a user and a maintenance party.

In a possible implementation of the third aspect, when the vehicle is in the maintenance mode, the cloud sends first notification information to the client, where the first notification information indicates to suspend use of an intelligent management function of the client.

In a possible implementation of the third aspect, a second instruction is sent to the head unit, where the second instruction indicates the vehicle to exit the maintenance mode and indicates to set the intelligent management function of the vehicle to an available state.

In a possible implementation of the third aspect, when the vehicle exits the maintenance mode, the cloud sends second notification information to the client, where the second notification information indicates to enable the intelligent management function of the client.

A fourth aspect of the embodiments of this application provides a vehicle control system. The system includes a head unit, and the head unit is configured to perform the method according to any one of the first aspect and the possible implementations of the first aspect.

In a possible implementation of the fourth aspect, the vehicle control system further includes a client, and the client is configured to perform the method according to any one of the second aspect and the possible implementations of the second aspect.

In a possible implementation of the fourth aspect, the vehicle control system further includes a cloud, and the cloud is configured to perform the method according to any one of the third aspect and the possible implementations of the third aspect.

A fifth aspect of the embodiments of this application provides a vehicle control apparatus, including a processing unit and a transceiver unit.

The transceiver unit is configured to perform an obtaining operation and a sending operation in the method according to any one of the first aspect and the possible implementations of the first aspect. The processing unit is configured to perform an operation other than the obtaining operation and the sending operation in the method according to any one of the first aspect and the possible implementations of the first aspect.

A sixth aspect of the embodiments of this application provides a vehicle control apparatus, including a processing unit and a transceiver unit.

The transceiver unit is configured to perform an obtaining operation and a sending operation in the method according to any one of the second aspect and the possible implementations of the second aspect. The processing unit is configured to perform an operation other than the obtaining operation and the sending operation in the method according to any one of the second aspect and the possible implementations of the second aspect.

A seventh aspect of the embodiments of this application provides a vehicle control apparatus, including a processing unit and a transceiver unit.

The transceiver unit is configured to perform an obtaining operation and a sending operation in the method according to any one of the third aspect and the possible implementations of the third aspect. The processing unit is configured to perform an operation other than the obtaining operation and the sending operation in the method according to any one of the third aspect and the possible implementations of the third aspect.

An eighth aspect of the embodiments of this application provides a control apparatus, including a processor and a memory, where the processor stores instructions, and when the instructions stored in the memory are run on the processor, the method according to any one of the first aspect and the possible implementations of the first aspect, or according to any one of the second aspect and the possible implementations of the second aspect, or according to any one of the third aspect and the possible implementations of the third aspect is implemented.

A ninth aspect of this application provides a computer-readable storage medium, where the computer-readable storage medium stores instructions, and when the instructions are run on a processor, the method according to any one of the first aspect and the possible implementations of the first aspect, or according to any one of the second aspect and the possible implementations of the second aspect, or according to any one of the third aspect and the possible implementations of the third aspect is implemented.

A tenth aspect of this application provides a computer program product. When the computer program product is executed on a processor, the method according to any one of the first aspect and the possible implementations of the first aspect, or according to any one of the second aspect and the possible implementations of the second aspect, or according to any one of the third aspect and the possible implementations of the third aspect is implemented.

Beneficial effects according to the fourth aspect to the tenth aspect are similar to beneficial effects according to any one of the first aspect and the possible implementations of the first aspect, or according to any one of the second aspect and the possible implementations of the second aspect, or according to any one of the third aspect and the possible implementations of the third aspect. Details are not described herein again.

### BRIEF DESCRIPTION OF DRAWINGS

FIG. 1a is a diagram of a system architecture according to an embodiment of this application;
FIG. 1b is a diagram of a vehicle according to an embodiment of this application;
FIG. 2 is a schematic flowchart of a vehicle control method according to an embodiment of this application;
FIG. 3 is another schematic flowchart of a vehicle control method according to an embodiment of this application;
FIG. 4a is a diagram of an interface of a vehicle-mounted screen according to an embodiment of this application;
FIG. 4b is a diagram of an interface of a vehicle-mounted screen according to an embodiment of this application;
FIG. 5 is a diagram of an interface of a vehicle-mounted screen according to an embodiment of this application;
FIG. 6a is a diagram of an interface of a vehicle-mounted screen according to an embodiment of this application;
FIG. 6b is a diagram of an interface of a vehicle-mounted screen according to an embodiment of this application;
FIG. 6c is a diagram of an interface of a vehicle-mounted screen according to an embodiment of this application;
FIG. 7 is another schematic flowchart of a vehicle control method according to an embodiment of this application;
FIG. 8 is a diagram of an interface of a vehicle-mounted screen according to an embodiment of this application;
FIG. 9 is another schematic flowchart of a vehicle control method according to an embodiment of this application;
FIG. 10 is a diagram of an interface of a client according to an embodiment of this application;
FIG. 11 is another schematic flowchart of a vehicle control method according to an embodiment of this application;
FIG. 12 is a diagram of an interface of a vehicle-mounted screen according to an embodiment of this application;
FIG. 13 is a diagram of an interface of a client according to an embodiment of this application;
FIG. 14 is another schematic flowchart of a vehicle control method according to an embodiment of this application;
FIG. 15 is a diagram of an interface of a client according to an embodiment of this application;
FIG. 16 is a diagram of an interface of a vehicle-mounted screen according to an embodiment of this application;
FIG. 17a is a diagram of an interface of a vehicle-mounted screen according to an embodiment of this application;
FIG. 17b is a diagram of an interface of a client according to an embodiment of this application;
FIG. 18 is another schematic flowchart of a vehicle control method according to an embodiment of this application;
FIG. 19 is a diagram of an interface of a vehicle-mounted screen according to an embodiment of this application;
FIG. 20 is a diagram of an interface of a vehicle-mounted screen according to an embodiment of this application;
FIG. 21 is another schematic flowchart of a vehicle control method according to an embodiment of this application;
FIG. 22 is a diagram of a structure of a vehicle control system according to an embodiment of this application;
FIG. 23 is a diagram of a structure of a vehicle control apparatus according to an embodiment of this application; and
FIG. 24 is a diagram of a structure of a control device according to an embodiment of this application.

### DESCRIPTION OF EMBODIMENTS

Embodiments of this application provide a vehicle control method, a vehicle control system, and a related device. In the vehicle control method, a maintenance mode of the vehicle is set. When the vehicle enters the maintenance mode, current data access space is set as maintenance data space, and the maintenance data space is isolated from the user data space, so that privacy information of a user is protected. In addition, some functions of the vehicle may be set to a suspended state, so as to avoid a safety accident caused by an improper operation and a trouble caused to the user. Based on these manners, user experience is improved from different perspectives.

The following describes embodiments of this application with reference to the accompanying drawings. A person of ordinary skill in the art may learn that, with development of technologies and emergence of a new scenario, technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device. In addition, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural. In addition, the following embodiments (or implementations) may be separately used as a technical solution, or may be combined with each other as a technical solution. This is not limited in this application.

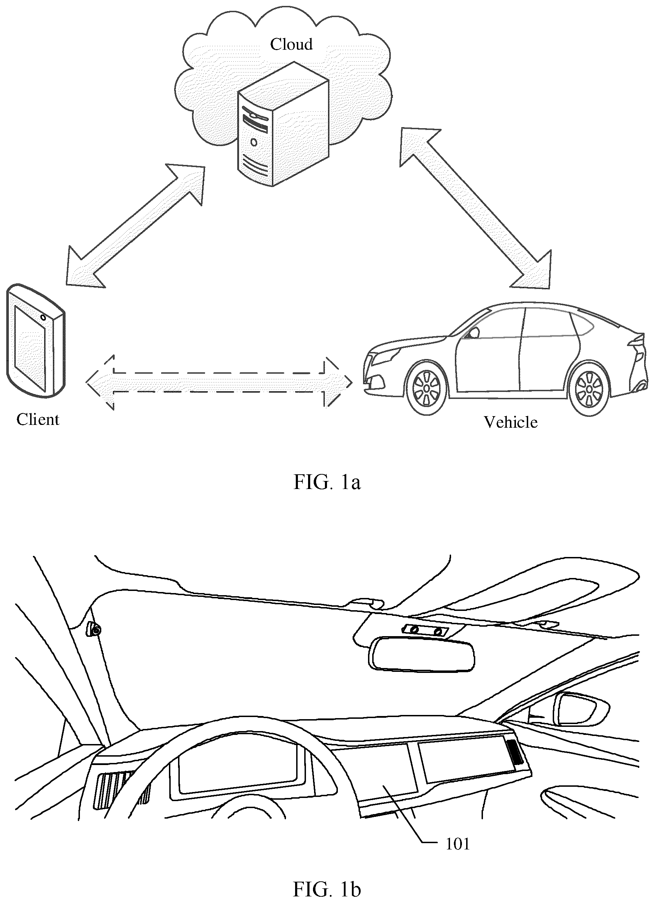

First, FIG. 1a is a diagram of a possible system architecture to which an embodiment of this application is applicable. As shown in FIG. 1a, the system architecture includes a vehicle, a cloud, and a client.

The vehicle is equipped with a head unit, where the head unit can implement information communication between the vehicle and the outside, including information communication between the vehicle and a person and between the vehicle and the cloud. The head unit can provide diversified functions, including but not limited to making a call, sending an SMS message, voice control, audio-visual entertainment, alarm, personalized configuration, remote control, and the like.

For example, as shown in FIG. 1b, the head unit may be installed on a center console, and a head unit host is located together with a vehicle-mounted screen 101. In some optional implementations, the head unit host may alternatively be separated from the vehicle-mounted screen 101. This is not specifically limited herein. During actual application, in addition to being located on the center console shown in 101 in FIG. 1b, the vehicle-mounted screen included in the vehicle may be a head up display (head up display, HUD), and a display interface of the HUD is located in front of a windshield.

The cloud includes a server, and is formed by a series of components and operation logic sets. The cloud may include a single server, or may include a server cluster. This is not specifically limited herein.

In some optional implementations, a user registers an account by using an application (application, APP) provided by the client, and the cloud provides a series of services for the account. These services are embodied in related functions of a head unit associated with the user account. For example, by operating the app, the user may remotely control the vehicle, receive alarm information, or the like. In other words, in a system shown in FIG. 1a, information may be transmitted through interaction between the head unit, the cloud, and the client. Optionally, communication between the cloud and the head unit and communication between the cloud and the client may be performed by using a network protocol. The network protocol may include a transmission control protocol (transmission control protocol, TCP), a user datagram protocol (user datagram protocol, UDP), a hypertext transfer protocol (hypertext transfer protocol, HTTP), and a hypertext transfer protocol over secure socket layer (hypertext transfer protocol over secure socket layer, HTTPS). The network protocol may further include a remote procedure call protocol (remote procedure call protocol, RPC), a representational state transfer (representational state transfer, REST) protocol, and the like that are used based on the foregoing protocols. This is not specifically limited herein.

In some optional implementations, the head unit and the client may directly interact with each other without participation of the cloud. It may be understood that the cloud and the head unit may also interact with each other without participation of the client.

It should be noted that, in this embodiment of this application, the client includes a terminal device, and there are a plurality of possible types of the terminal device. In addition to a smartphone shown in FIG. 1a, the terminal device may be another terminal device, for example, a tablet computer or a smartwatch. This is not specifically limited herein.

In some optional implementations, in addition to the vehicle, the cloud, and the client, the system architecture to which embodiments of this application are applicable may further include other devices such as a core network device, a wireless relay device, and a wireless backhaul device. This is not limited in embodiments of this application either.

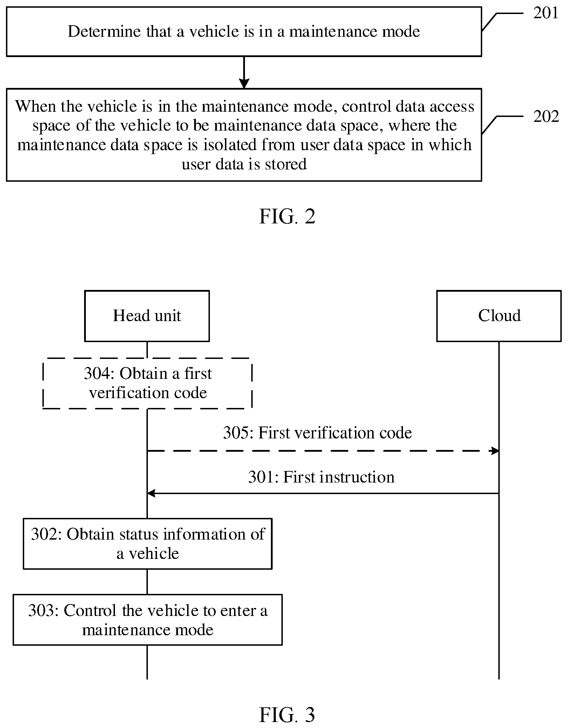

In the following, FIG. 2 is a schematic flowchart of a vehicle control method according to an embodiment of this application. The method includes the following steps.

201: Determine that a vehicle is in a maintenance mode.

Maintenance may be carried out during processing of the vehicle or after the vehicle is sold. In different scenarios, manners of determining whether the vehicle is in the maintenance mode are different. The following separately describes possible cases.
(1) The vehicle is in a non-factory mode.

In this case, the vehicle has been produced and enters a scenario, for example, delivery or exhibition. In this case, a head unit of the vehicle stores user data. The user data herein includes vehicle owner data or data generated by another person in a process of operating the vehicle, for example, in a process of setting a default air conditioner temperature or a seat height of the vehicle.

With reference to the diagram, the following describes a process in which the head unit determines that the vehicle is in the maintenance mode when the vehicle is in the non-factory mode. FIG. 3 is a schematic flowchart of a vehicle control method according to an embodiment of this application. The method includes the following steps.

301: A cloud sends a first instruction to a head unit.

In a non-factory mode, to avoid interference to a normal use process, authorization need to be obtained for entering a maintenance mode. In other words, the cloud needs to perform some check operations to send, to the head unit, the first instruction that indicates a vehicle to enter the maintenance mode. Specifically, an operator may access the cloud by using a web page (web), and create a maintenance work order on the cloud. The cloud may include a work order management system. The system stores the maintenance work order. After a user signs and confirms the maintenance work order, the cloud delivers the first instruction to the head unit if the check succeeds. That the check succeeds means that the maintenance work order corresponding to this maintenance exists in the work order management system, and the maintenance work order has been confirmed. The confirmed maintenance work order includes confirmation information of the user, and the confirmation information includes information that can indicate authorization of the user, for example, a signature, a fingerprint, or a seal. This is not specifically limited herein.

302: The head unit obtains status information of the vehicle.

The head unit further detects the vehicle to obtain the status information of the vehicle. The status information of the vehicle includes motion status information of the vehicle, network status information of the vehicle, and system status information of the vehicle. The motion status information of the vehicle indicates whether the vehicle is in a moving state or a static state, the network status of the vehicle indicates whether a network of the vehicle is normal, and the system status information of the vehicle indicates whether each module (including software and hardware) of the vehicle is normal.

303: The head unit controls the vehicle to enter the maintenance mode.

When the status information of the vehicle meets the state, the head unit controls, according to the first instruction, the vehicle to enter the maintenance mode. That the status information of the vehicle meets a status condition includes that the motion status information of the vehicle indicates that the vehicle is in the static state, the network status information of the vehicle indicates that the network of the vehicle is normal, and the system information of the vehicle indicates that a system of the vehicle is normal.

In this embodiment of this application, when the vehicle is in the non-factory mode, the head unit controls, in response to the first instruction only when determining that the status information of the vehicle meets the status condition, the vehicle to enter the maintenance mode. This improves security and reliability. In addition, the status information of the vehicle includes information in a plurality of dimensions: a motion status, a system status, and a network status. It is ensured that entering the maintenance mode is triggered only when the vehicle is in the static state and both the system and the network are normal. This further improves security and reliability of the technical solutions of this application.

In some optional implementations, in addition to the foregoing condition, another condition needs to be met when the head unit determines that the vehicle enters the maintenance mode. To be specific, before step 301, the method further includes the following steps.

304: The head unit obtains a first verification code.

The head unit can obtain the first verification code by responding to an operation on a vehicle-mounted screen, where the first verification code requests to enter the maintenance mode. It may be understood that there may be different manners of operating the vehicle-mounted screen. If the vehicle-mounted screen is located in a center console position shown in FIG. 1b and is a touchscreen, the vehicle-mounted screen may be directly controlled to trigger entering the maintenance mode. If the vehicle-mounted screen is not a touchscreen, the vehicle-mounted screen may be operated by operating a control device, where the control device includes a remote control, a control button, or the like. This is not specifically limited herein. The following describes embodiments of this application by using an example in which the vehicle-mounted screen is a touchscreen.

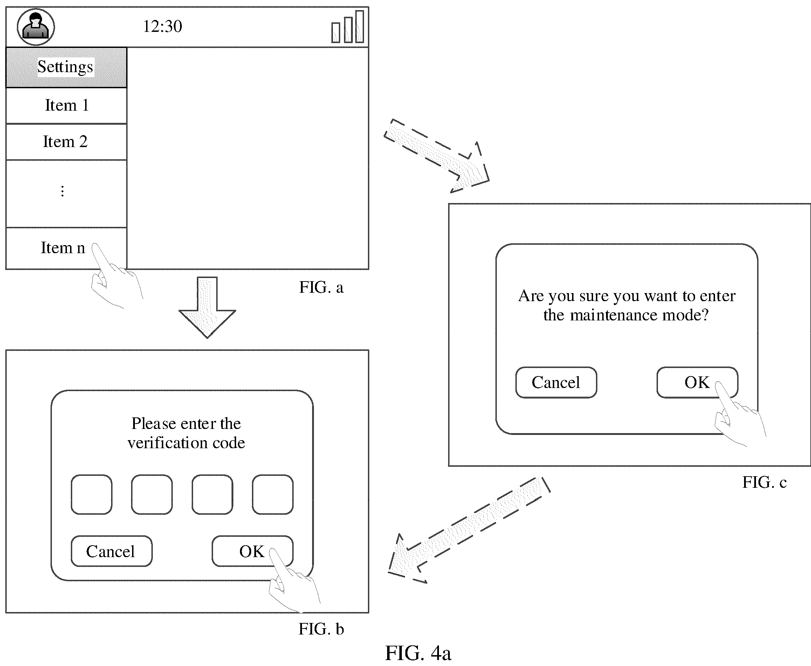

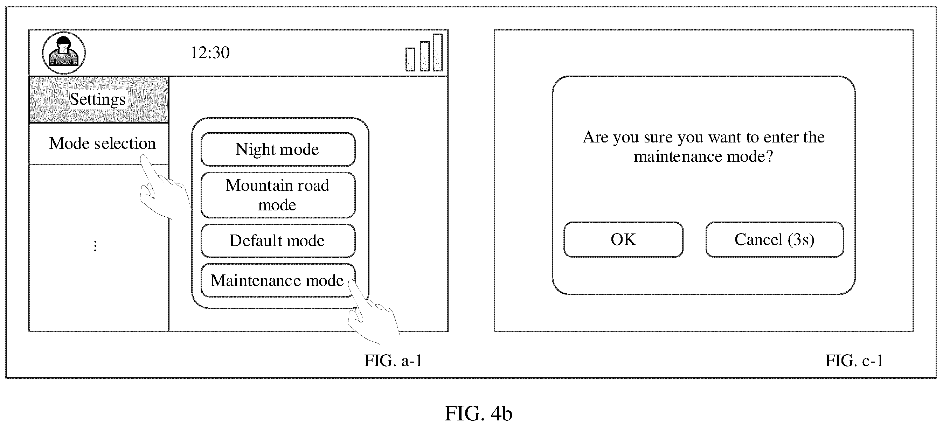

The following describes, with reference to the diagrams, a process in which the head unit obtains the verification code. FIG. 4a and FIG. 4b are diagrams of interfaces of a vehicle-mounted screen according to an embodiment of this application.

In some optional implementations, as shown in FIG. 4a, an operator taps a control "Item n" on the vehicle-mounted screen shown in FIG. a, and the head unit controls the vehicle-mounted screen to display a verification interface shown in FIG. b. A name of the control "Item n" is determined according to an actual application requirement, and is not limited herein. An operation of tapping the item n by the operator includes tapping, double tapping, continuously tapping the control for a preset quantity of times, or touching and holding the control for preset duration. Both the preset quantity of times and the preset duration may be determined according to an actual application requirement, and are not specifically limited herein. It may be understood that, displaying the verification interface only when the control "Item n" is tapped for the preset quantity of times, or when the control "Item n" is touched and held for preset duration is to prevent a misoperation, so as to avoid mistakenly triggering the maintenance mode in a normal use process of the user.

In some optional implementations, an interface shown in FIG. a may have another form. For example, as shown in FIG. a-1 in FIG. 4b, entering the maintenance mode is triggered based on a mode selection manner.

In some optional implementations, to avoid triggering the maintenance mode by mistake in a normal use process of the user, in addition to setting the preset quantity of times or the preset duration described above, after responding to the operation instruction for FIG. a or FIG. a-1, a confirmation interface shown in FIG. c is displayed to prompt the operator whether to enter the maintenance mode. The operator taps a control "OK", and the head unit controls the vehicle-mounted screen to display the verification interface shown in FIG. b. Optionally, in addition to content shown in FIG. c, the confirmation interface may further include other content. For example, as shown in FIG. c-1 in FIG. 4b, the confirmation interface further includes a countdown module. The countdown module is set at a position of a control "Cancel". It is assumed that a countdown is 3 seconds. If the vehicle-mounted screen displays the confirmation interface shown in FIG. c-1, and no instruction for the confirmation interface is obtained after 3 seconds, the head unit considers by default that the operator taps the control "Cancel". The head unit is controlled to return to a previously displayed interface. This setting can also effectively prevent a misoperation.

The operator enters the first verification code on the verification interface shown in FIG. b. Based on this operation, the head unit obtains the first verification code. It may be understood that FIG. b merely uses an example in which the verification code is a four-digit number. During actual application, the verification code may further have more or fewer digit numbers. The verification code includes at least one of a digit, a letter, and a character. The letter includes an uppercase letter and a lowercase letter. This is not specifically limited herein.

305: The head unit sends the first verification code to the cloud.

After obtaining the first verification code, the head unit sends the first verification code to the cloud, to trigger entering the maintenance mode. With reference to FIG. 4a, the operator enters the first verification code on the verification interface shown in FIG. b, and taps the control "OK". The head unit sends the first verification code to the cloud in response to a touch instruction for the control "OK".

After receiving the first verification code, the cloud checks the first verification code to obtain a first check result, and sends the first check result to the head unit as a basis for determining whether the head unit controls the vehicle to enter the maintenance mode. The first check result indicates that the verification of the first verification code succeeds or fails. That the verification succeeds means that the first verification code is the same as a verification code generated by the cloud. In other words, a to-be-processed work order corresponding to the verification code exists in the work order management system of the cloud. In this case, that the verification fails means that the first verification code is different from the verification code generated by the cloud. In other words, no work order corresponding to the verification code exists in the work order management system of the cloud, that is, no maintenance task corresponding to the verification code exists.

Optionally, the first check result may be carried in the first instruction, or the cloud may send first check information to the head unit based on the embodiment shown in FIG. 3. The first check information includes the first check result.

A process in which the cloud generates the verification code specifically includes: The operator creates a maintenance work order on a cloud service platform (which may be displayed as a web interface) of the cloud, and the cloud may display, on the web interface, a verification code corresponding to the work order. Based on this process, the operator can obtain the verification code, to enter the verification code on the vehicle-mounted screen. The cloud may set a number for the maintenance work order, and then process the work order number based on an algorithm to obtain a verification code corresponding to the work order, so as to ensure that the work order is in a one-to-one correspondence with the verification code. In this way, an error is prevented.

When the head unit sends, to the cloud, the first verification code used to request to enter the maintenance mode, in addition to the foregoing description, whether the first check result indicates that the check succeeds further needs to be added to a determining condition for controlling, by the head unit, the vehicle to enter the maintenance mode in step 303. When the status information of the vehicle meets the status condition and the first check result indicates that the check succeeds, the head unit controls, according to the first instruction, the vehicle to enter the maintenance mode.

In this embodiment of this application, when the vehicle is in the non-factory mode, the head unit determines, based on the first check result and the status information of the vehicle, whether to control, according to the first instruction, the vehicle to enter the maintenance mode. Confirmation from a plurality of perspectives can not only avoid a misoperation, but also improve security, prevent a vehicle status from being tampered with, and improve stability.

(2) The vehicle is in a factory mode.

When the vehicle is in the factory mode, the vehicle has not been delivered. In this case, a head unit is not bound to a cloud or a client. Therefore, an operator does not need to create a maintenance work order or check a verification code. In other words, if the vehicle is in the factory mode, when status information of the vehicle meets a status condition, the head unit controls, in response to a second operation instruction for a vehicle-mounted screen, the vehicle to enter the maintenance mode. The second operation instruction indicates to enter the maintenance mode.

In some optional implementations, for the second operation instruction for the vehicle-mounted screen, shown in FIG. a and FIG. c in FIG. 4a, the operator taps a control "Item n" on a vehicle-mounted screen shown in FIG. a, and the head unit controls the vehicle-mounted screen to display a confirmation interface shown in FIG. c. The operator taps a control "OK" shown in FIG. c. When determining that the status information of the vehicle meets the status condition, the head unit controls, in response to the operation instruction, the vehicle to enter the maintenance mode.

In some optional implementations, the operator taps a control "Item n" (for example, the control n is a control for triggering the maintenance mode) on the vehicle-mounted screen shown in FIG. a, and the vehicle-mounted screen may no longer display a confirmation interface shown in FIG. c. Instead, when determining that the status information of the vehicle meets the status condition, the head unit controls, in response to the operation instruction, the vehicle to enter the maintenance mode.

In this embodiment of this application, in different vehicle modes, manners in which the head unit controls the vehicle to enter the maintenance mode are different. This enriches application scenarios of the technical solutions of this application. In addition, when the vehicle is in the factory mode, the vehicle can be controlled to enter the maintenance mode without interacting with the cloud. This simplifies a process.

202: When the vehicle is in the maintenance mode, control data access space of the vehicle to be maintenance data space, where the maintenance data space is isolated from user data space in which user data is stored.

When the vehicle is in the maintenance mode, the head unit controls the data access space of the vehicle to be the maintenance data space. That is, the head unit controls the vehicle to enable a data isolation function, and all data that can be accessed by the operator is data in the maintenance data space. The maintenance data space is isolated from the user data space used to the store user data. The data space isolation herein means that an unauthorized user is not allowed to access the user data space. The unauthorized user is a user who does not log in to a current account, for example, maintenance personnel.

In the maintenance mode, the data access space is controlled to be the maintenance data space, and the maintenance data space is isolated from the user data space, to prevent leakage of the user data stored in the user data space, protect user privacy, avoid impact of the maintenance data on the user data, and improve user experience.

In some optional implementations, before step 202, regardless of whether the head unit is in the factory mode or the non-factory mode, when determining that a specific condition is met, the head unit controls the data access space of the vehicle to be the maintenance data space. In other words, before step 202, the head unit further obtains a first operation instruction for the vehicle-mounted screen, the status information of the vehicle, and maintenance data space information, where the first operation instruction indicates to enable the data isolation function. When the status information of the vehicle meets a status condition, and the data space information indicates that the maintenance data space exists, the head unit controls, in response to the first operation instruction, the data access space of the vehicle to be the maintenance data space.

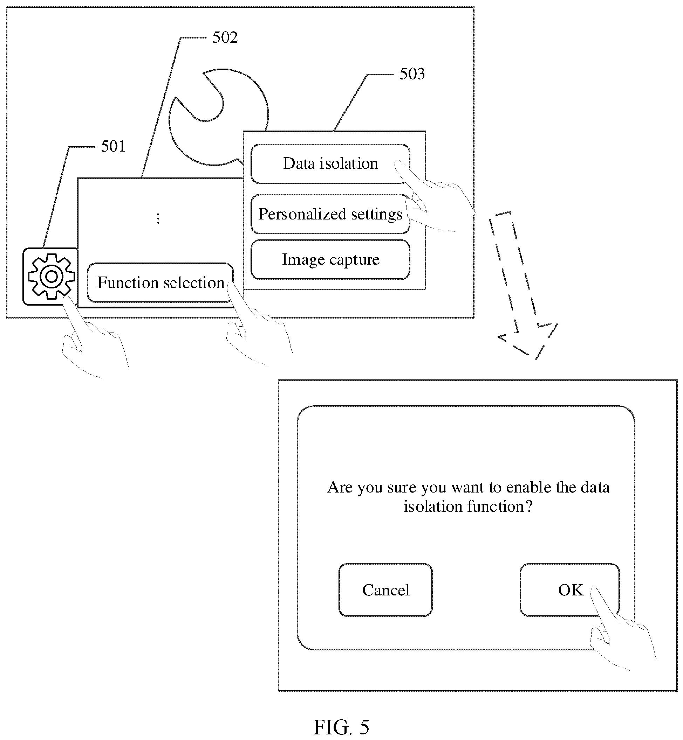

The following provides description with reference to a diagram. FIG. 5 is a diagram of an interface of a vehicle-mounted screen according to an embodiment of this application.

In some optional implementations, as shown in FIG. 5, a head unit displays a menu interface 502 in response to a touch instruction for a setting control 501. Then, a function menu 503 is displayed in response to a touch instruction for a "Function selection" control in the menu interface 502. The operator taps a "Data isolation" control in the function menu 503, and the head unit obtains, in response to this operation, a first operation instruction.

In some optional implementations, the operator taps a "Data isolation" control in the function menu 503, and the head unit may further control, in response to this operation, the vehicle-mounted screen to display a confirmation interface shown in a lower right figure in FIG. 5. The operator taps an "OK" control in the confirmation interface, so that the head unit obtains the first operation instruction.

It should be noted that FIG. 5 is merely an example of obtaining the first operation instruction by the head unit, and does not limit an actual interface layout, provided that the head unit can obtain, in response to the vehicle-mounted screen, the first operation instruction that indicates to enable the data isolation function. This is not specifically limited herein.

In this embodiment of this application, when determining that the status information of the vehicle meets the status condition and maintenance data space information exists, the head unit enables, in response to the first operation instruction for the vehicle-mounted screen, the data isolation function. Confirmation from a plurality of perspectives not only prevents a misoperation, but also improves security and stability.

It may be understood that, from a perspective of hardware, maintenance data space corresponds to a storage area. The storage area may be divided based on a maintenance process, or an area of a fixed size may be reserved. This is not specifically limited herein. Before enabling the data isolation function, the vehicle needs to ensure that the maintenance data space exists.

In this embodiment of this application, there are a plurality of sources of the maintenance data space, which are separately described below.

In some optional implementations, the vehicle or the head unit of the vehicle is started or restarted, and the maintenance data space is created in a startup or restart process, so that the maintenance data space is created after the vehicle or the head unit is started or restarted. Starting the vehicle or the head unit means that the vehicle or the head unit is not powered on before the vehicle or the head unit is started. Restarting the vehicle or the head unit means a process in which an entire vehicle component or the head unit is powered off and then powered on. To create the maintenance data space during startup or restart, maintenance data space is newly created from a bottom layer of data logic. In this way, the maintenance data space and the user data space are isolated from each other from the bottom layer, to achieve a better isolation effect.

In this embodiment of this application, the maintenance data space is created in a process of starting or restarting the vehicle or the head unit, so that the maintenance data space is completely isolated from the user data space, to further prevent user data from being accessed in a process of accessing the maintenance data space, so that user privacy is better protected.

In some optional implementations, the maintenance data space is preset data space. In this case, the data access space can be controlled to be the maintenance data space without restarting the head unit or the vehicle. The preset data space may be data space preset when the vehicle is delivered from a factory, or may be maintenance data space created in a previous maintenance process. This is not specifically limited herein. Before this maintenance, historical data in the maintenance data space can be cleared to prevent the historical data from affecting this maintenance process.

In this embodiment of this application, in a current maintenance process, the maintenance data space may be determined without starting or restarting the vehicle or the head unit, so that maintenance steps are simplified and complexity of the maintenance process is reduced. In addition, the maintenance data space has a plurality of sources, thereby enriching application scenarios and implementations of the technical solutions of this application, and improving flexibility of the technical solutions of this application.

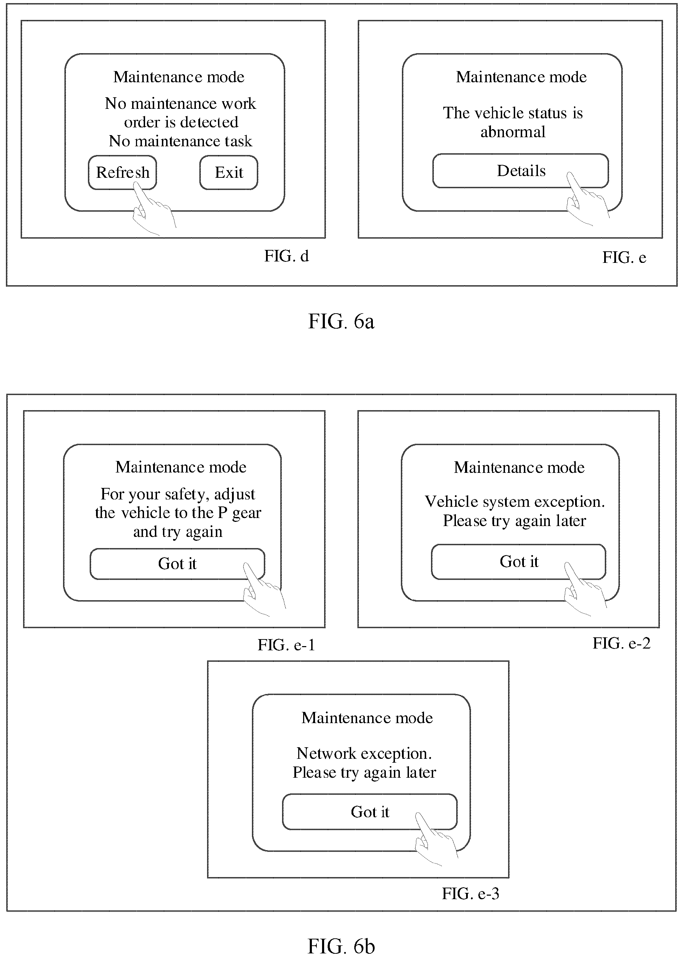

In some optional implementations, if a condition for entering the maintenance mode or enabling the data isolation function is not met, the head unit controls, based on exception causes, the vehicle-mounted screen to display different prompt interfaces. FIG. 6a to FIG. 6c are diagrams of interfaces of a vehicle-mounted screen according to an embodiment of this application.

For example, if a first check result indicates that a check fails, a head unit may control the vehicle-mounted screen to display a prompt interface shown in FIG. d in FIG. 6a. An operator taps a control "Refresh", and the head unit may control the vehicle-mounted screen to display a verification interface, so that the operator re-enters a first verification code.

For example, if the head unit detects that status information of a vehicle does not meet a status condition, the head unit may control the vehicle-mounted screen to display a prompt interface shown in FIG. e in FIG. 6a. Then, the head unit displays, in response to a touch instruction for a control "Details", a specific exception prompt interface shown in FIG. 6b. If the head unit detects that the vehicle is not in a static state, the head unit may control the vehicle-mounted screen to display an exception prompt interface shown in FIG. e-1 in FIG. 6b. If the head unit detects a vehicle system exception, the head unit may control the vehicle-mounted screen to display an exception prompt interface shown in FIG. e-2 in FIG. 6b. If the head unit detects a network exception, the head unit may control the vehicle-mounted screen to display an exception prompt interface shown in FIG. e-3 in FIG. 6b. The prompt interface for the vehicle system exception may alternatively display a specific exception cause. That is, the interface shown in FIG. e-2 may display specific abnormal hardware or software, for example, may display words "An exception occurs when entering the maintenance mode. Please restart the TBOX", "An exception occurs when entering the maintenance mode. Please restart the center console", or the like. This is not specifically limited herein.

It may be understood that when the status information of the vehicle does not meet the status condition, the vehicle-mounted screen may not display the prompt interface shown in FIG. e in FIG. 6a, but directly display, based on a specific exception cause, each exception prompt interface corresponding to the cause in FIG. 6b. This is not specifically limited herein.

It should be noted that if the condition for enabling the data isolation function is not met, the vehicle-mounted screen displays a prompt interface similar to that in FIG. 6a and FIG. 6b, to notify a user of the exception cause. Details are not described herein again.

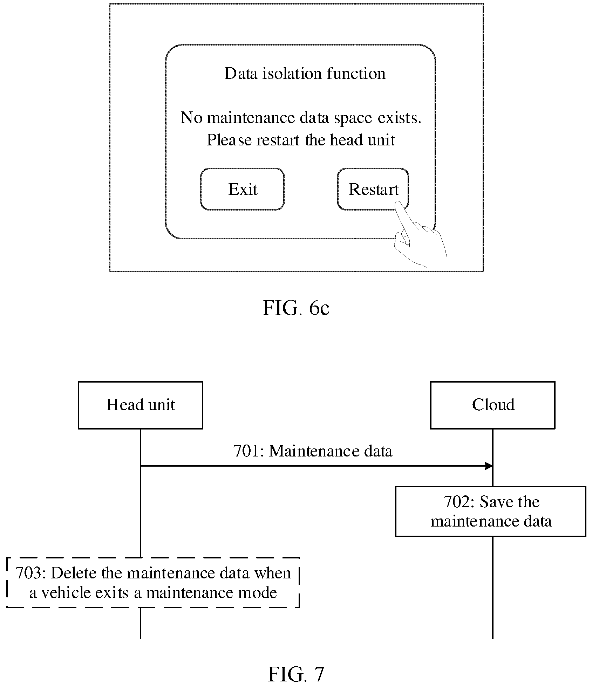

For example, if data space information indicates that no maintenance data space exists, and consequently the data isolation function cannot be enabled, the head unit may control the vehicle-mounted screen to display a prompt interface shown in FIG. 6c. The operator taps a control "Restart", and the head unit restarts and newly creates maintenance data space during the restart.

In some optional implementations, the maintenance data space is used to store maintenance data, and the head unit and the cloud perform different operations on the maintenance data. FIG. 7 is a schematic flowchart of a vehicle control method according to an embodiment of this application. The method includes the following steps.

701: A head unit sends maintenance data to a cloud.

The maintenance data includes data generated when a vehicle enters a maintenance mode and an operator operates the vehicle, for example, when the operator adjusts an air conditioner temperature or a seat height. This is not specifically limited herein. The maintenance data can reflect a maintenance process and a maintenance operation. The maintenance data is stored in maintenance data space, and the head unit sends the maintenance data to the cloud.

702: The cloud stores the maintenance data.

The cloud may store the maintenance data in a plurality of manners, for example, store the maintenance data in a cloud database (database, DB), a cache (cache), or a message queue (message queue). This is not specifically limited herein. In addition, the cloud may further store a transaction log (transaction log) of the maintenance data.

In this embodiment of this application, the head unit can send the maintenance data to the cloud, so that the cloud stores the maintenance data, and a user or maintenance personnel can view the maintenance data, perform error correction, check, and the like. This improves practicability of the technical solution.

In some optional implementations, after step 701, the head unit may further perform step 703 of deleting the maintenance data when the vehicle exits the maintenance mode.

When the vehicle exits the maintenance mode, the head unit deletes the maintenance data. There are several manners for deleting the maintenance data. Only the maintenance data in the maintenance data space may be deleted, or the maintenance data space may be deleted. This is not specifically limited herein. Deleting the maintenance data space means releasing a storage area corresponding to the maintenance data space. It may be understood that, if the maintenance data space is newly created in this current maintenance, and only the maintenance data is deleted, in the next maintenance, the maintenance data space may not be created again, and the maintenance data space is directly used.

In this embodiment of this application, when the maintenance mode is exited, the local maintenance data of the head unit is deleted. This avoids a trouble caused by the maintenance data to the user, and further improves user experience.

In some optional implementations, when the maintenance mode is exited, the local maintenance data of the head unit may not be deleted. This is not limited in this application.

In the foregoing introduction, it is emphasized that how the vehicle enters the maintenance mode, how to realize the data access space as the maintenance data space in the maintenance mode, and how to process the maintenance data. During actual application, because the head unit has abundant intelligent management functions, in the maintenance mode, the head unit and/or a client further controls these functions. The following describes a process in which the head unit and/or the client controls each function.

(1) When the vehicle is in the maintenance mode, set the intelligent management function of the head unit and/or the client to a suspended state.

When the vehicle is in maintenance mode, the head unit sets the intelligent management function of the vehicle to the suspended state. That the head unit sets the intelligent management function of the vehicle to the suspended state may be understood as that the head unit temporarily disables the intelligent management function of the vehicle. The intelligent management function includes at least one of the following: a remote control function, an alarm function, an audio-visual entertainment function, a personalized configuration function, or an image capture function.

The remote control function may also be referred to as a remote control function, and refers to a function of remotely controlling the vehicle by using a wireless signal or an electrical signal. For example, an air conditioner temperature, a seat height, an air conditioner wind direction, and audio and video playing of the vehicle are controlled based on an application (application, APP). This is not specifically limited herein.

The alarm function is a function of sending alarms or prompts to the outside, including an alarm to a vehicle owner and a maintenance hotline alarm. The maintenance hotline alarm includes sending an alarm to a maintenance party when a vehicle fault is detected. There are a plurality of possibilities for sending the alarm to the vehicle owner. For example, an application is used to prompt the user that a vehicle door is not closed, an air conditioner is not closed, a vehicle window is not closed, or power is insufficient. This is not specifically limited herein. It should be noted that the alarm function for use suspension may not include an emergency help function, for example, E-Call, I-Call, or B-Call.

The audio-visual entertainment function includes functions, such as audio and video playing, e-book reading, real-world navigation, and map display, and these functions bring rich audio-visual experience to the user.

The personalized configuration function refers to configuring parameters of the vehicle based on setting of a user, for example, a default air conditioner temperature, a default seat height, and a schedule reminder. This is not specifically limited herein. The personalized configuration function can better match a user habit and requirement.

The image capture function refers to a function, for example, photographing, video recording, or video calling by using an image capture device (for example, a vehicle-mounted camera). When the vehicle is in the maintenance mode, in consideration of protecting privacy of an operator in the vehicle, the image capture function of the vehicle may be set to a suspended state.

In some optional implementations, a default program may be set for the head unit, so that regardless of whether the vehicle is in the factory mode or the non-factory mode, the head unit can suspend use of the intelligent management function of the vehicle provided that the vehicle enters the maintenance mode.

In some optional implementations, when the vehicle is in the non-factory mode, in addition to indicating the vehicle to enter the maintenance mode, the first instruction sent by the cloud to the head unit may further indicate the head unit to suspend use of the intelligent management function of the vehicle. Alternatively, when the vehicle is in the non-factory mode and enters the maintenance mode, the cloud additionally sends, to the head unit, an instruction for indicating to suspend use of the intelligent management function of the vehicle. This is not specifically limited herein.

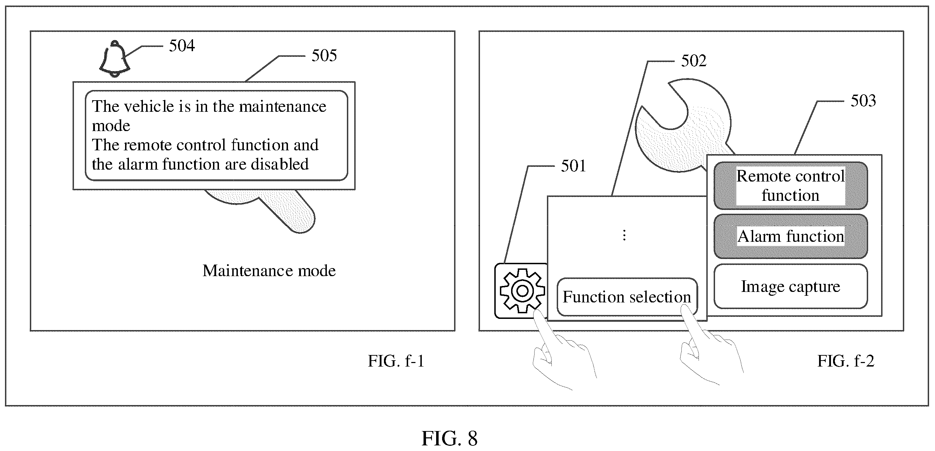

The following provides description with reference to a diagram by using an example in which the head unit suspends use of the remote control function and the alarm function of the vehicle. FIG. 8 is a diagram of an interface of a vehicle-mounted screen according to an embodiment of this application.

After a head unit sets a remote control function and an alarm function of a vehicle to a suspended state, information may be displayed on the vehicle-mounted screen in a plurality of manners to notify a user.

In some optional implementations, as shown in FIG. f-1 in FIG. 8, the vehicle-mounted screen displays a notification control 504, an operator taps the notification control 504, and the vehicle-mounted screen displays a notification interface 505. A notification word "The vehicle is in the maintenance mode, and the remote control function and the alarm function are disabled" is displayed on the notification interface 505, to provide a prompt for the operator in the vehicle. It may be understood that "A specific function is disabled" displayed on the vehicle-mounted screen means that the specific function is in a suspended state. In other words, in embodiments of this application, the disabled function means that the function is set to the suspended state.

In some optional implementations, as shown in FIG. f-2 in FIG. 8, the head unit displays a menu interface 502 in response to a touch instruction for a setting control 501. Then, a function menu 503 is displayed in response to a touch instruction for a "Function selection" control in the menu interface 502. Colors of a "Remote control function" control and an "Alarm function" control in the function menu 503 are different from colors of other controls, indicating that the two functions are in the suspended state. When the operator taps the control, the vehicle-mounted screen does not change, or the vehicle-mounted screen displays content similar to that shown in the notification interface 505, to notify the operator that some functions of the vehicle are in the suspended state.

It should be noted that FIG. 8 uses an example in which the head unit suspends use of the remote control function and the alarm function of the vehicle. An example of the vehicle-mounted screen does not constitute a limitation on the technical solutions of this application. Specific content displayed on the vehicle-mounted screen may be further set based on an actual application requirement. Alternatively, an icon of the notification control 504 may be in another shape, and a location, a size, and a notification word of the notification interface 505 may be different. This is not specifically limited herein. For example, a maintenance interface may not include the notification control 504. The operator may pull down a notification bar, and the vehicle-mounted screen displays the notification interface 505.

In this embodiment of this application, the head unit sets the intelligent management function of the vehicle to the suspended state, so that inconvenience caused by the intelligent management function when the vehicle is in the maintenance mode can be avoided. For example, the remote control function is set to the suspended state, to prevent a misoperation from causing personal injury to an operator in the vehicle, and improve security of the technical solutions of this application. The alarm function of the vehicle is set to the suspended state, to reduce unnecessary information transmission, and avoid a trouble caused to a user and a maintenance party.

When the vehicle is in the non-factory mode and in the maintenance mode, the client also sets the intelligent management function of the client to the suspended state. The intelligent management function of the client herein corresponds to the intelligent management function of the vehicle, and includes at least one of the following: a remote control function, an alarm function, an audio-visual entertainment function, a personalized configuration function, or an image capture function. There are a plurality of possible implementations for the client to set the intelligent management function of the client to the suspended state.

In some optional implementations, the head unit sends first notification information to the client, where the first notification information indicates to suspend use of the intelligent management function of the client. The client obtains the first notification information from the head unit, and sets the intelligent management function of the client to the suspended state based on the first notification information. The first notification information may be directly sent by the head unit to the client, or may be sent by the head unit to the cloud and forwarded by the cloud to the client. This is not specifically limited herein.

In some optional implementations, when or after sending, to the head unit, a first instruction that indicates the vehicle to enter the maintenance mode, the cloud sends first notification information to the client, where the first notification information indicates to suspend use of the intelligent management function of the client. The client obtains the first notification information from the head unit, and sets the intelligent management function of the client to the suspended state based on the first notification information.

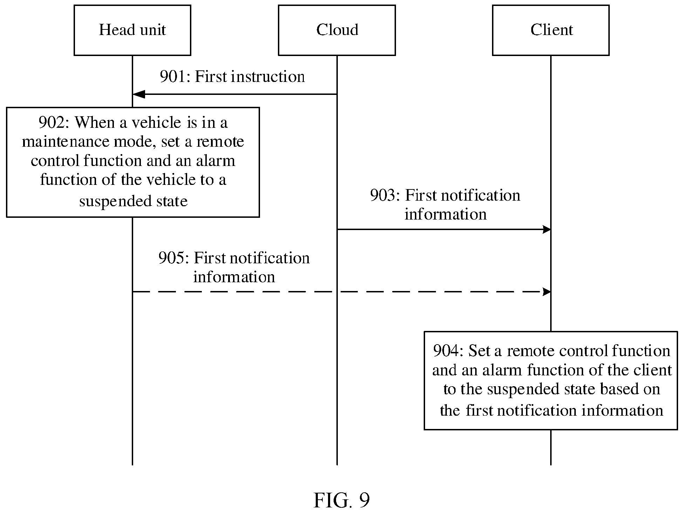

For example, an example in which the client suspends use of the remote control function and the alarm function of the client is used for description with reference to a diagram. FIG. 9 is a schematic flowchart of a vehicle control method according to an embodiment of this application. The method includes the following steps.

901: A cloud sends a first instruction to a head unit.

The first instruction indicates a vehicle to enter a maintenance mode, and indicates to set a remote control function and an alarm function of the vehicle to a suspended state.

902: When the vehicle is in the maintenance mode, set the remote control function and the alarm function of the vehicle to the suspended state.

903: The cloud sends first notification information to a client.

The first notification information indicates to set a remote control function and an alarm function of the client to a suspended state.

904: The client sets the remote control function and the alarm function of the client to the suspended state based on the first notification information.

In some optional implementations, step 903 may be replaced with the following step.

905: The head unit sends the first notification information to the client.

It may be understood that a specific implementation process of step 901 to step 905 is described above. Details are not described herein again.

When the client sets an intelligent management function of the client to a suspended state, an interface of the client is changed. The following uses an example in which the client sets the remote control function and the alarm function of the client to the suspended state for description with reference to the diagram.

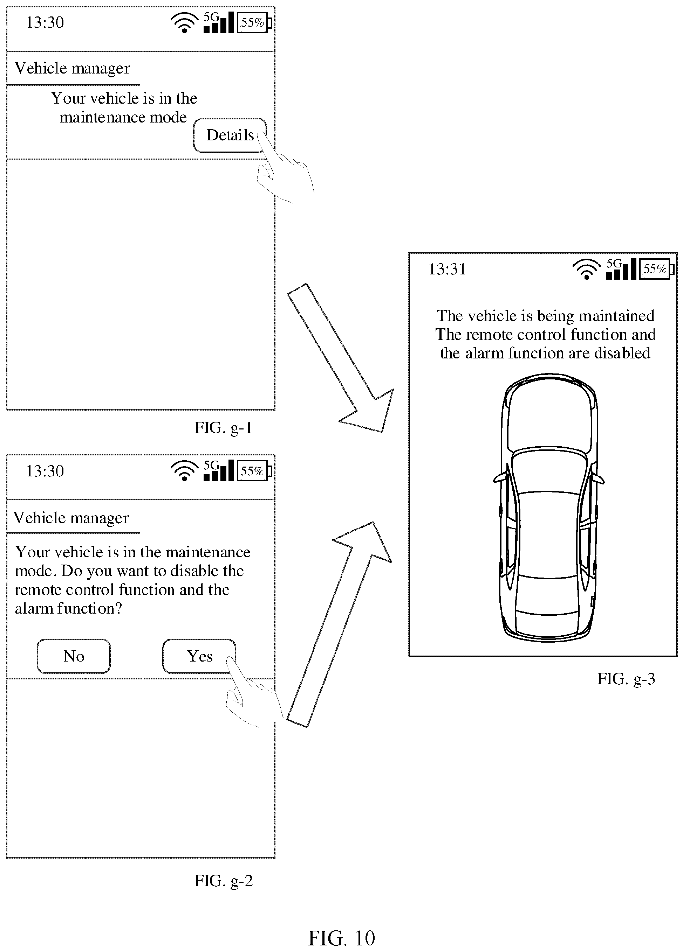

FIG. 10 is a diagram of an interface of a client according to an embodiment of this application.

It is assumed that an app for interacting with a head unit and a cloud is installed on the client, and an app name is "Vehicle manager". When a vehicle is in a maintenance mode, the app may push different message notifications, and there are a plurality of possibilities for content displayed on a home page of the app. The following separately describes the possible cases.

1.1 The client automatically suspends use of a remote control function and an alarm function.

In this case, after receiving first notification information, the client directly sets the remote control function and the alarm function of the client to the suspended state based on the first notification information, without requiring participation of a user.

For example, as shown in FIG. g-1 in FIG. 10, a notification bar of the client notifies the user that the vehicle is in the maintenance mode. The user taps "Details" to enter the home page of the app. When the client automatically suspends use of the remote control function and the alarm function, the home page of the app may be shown in FIG. g-3 in FIG. 10.

In some optional implementations, the app may not push a message, that is, the client does not display an interface shown in FIG. g-1 in FIG. 10. Instead, when the vehicle is in the maintenance mode, the user taps to enter the app, and an interface shown in FIG. g-3 in FIG. 10 is directly displayed.

1.2 The client suspends, in response to an operation instruction, use of a remote control function and an alarm function.

In this case, after receiving first notification information, the client sends a prompt to a user, so as to prompt the user to make a selection and decide whether to suspend use of the remote control function and the alarm function.

For example, as shown in FIG. g-2 in FIG. 10, a notification bar of the client notifies the user that the vehicle is in the maintenance mode, and the user performs an operation, to determine whether to disable the remote control function and the alarm function. When the user taps a control "Yes", the client suspends use of the remote control function and the alarm function of the client, that is, disabling the remote control function and the alarm function shown in FIG. 10. After the user taps the control "Yes", the client may control a client interface to enter the home page of the app shown in FIG. g-3 in FIG. 10. Optionally, after the user taps the control "Yes", the client may alternatively restore to an interface before this message is pushed, and does not switch to the home page of the app shown in FIG. g-3 in FIG. 10, to avoid inconvenience caused to use by the user.

In some optional implementations, to avoid inconvenience caused because the user does not use a client device for a long time and does not respond to the prompt shown in FIG. g-2 for a long time, the client may further set a timer. If no operation instruction for the control "Yes" or a control "No" is obtained within duration set by the timer, the client may automatically disable the remote control function and the alarm function.

It should be noted that FIG. g-1 and FIG. g-3 in FIG. 10 are merely examples of the client interface. During actual application, there may be a plurality of cases of content displayed in the notification bar and the home page of the app, provided that the notification bar and the home page of the app can reflect that the vehicle is in the maintenance mode and the remote control function and the alarm function are disabled. This is not specifically limited herein. Similarly, FIG. g-2 in FIG. 10 is merely an example of the client interface. During actual application, the content displayed in the notification bar may further have a plurality of cases, provided that the notification bar can reflect that the vehicle is in the maintenance mode and the user needs to choose to suspend use of the remote control function and the alarm function. This is not specifically limited herein.

In this embodiment of this application, when the vehicle is in the maintenance mode and is in the non-factory mode, the intelligent management function of the client may be set to the suspended state, so that inconvenience caused by a misoperation of the client is avoided. For example, the remote control function is set to the suspended state, to prevent a misoperation from causing personal injury to an operator in the vehicle, and improve security of the technical solutions of this application. The alarm function of the vehicle is set to the suspended state, to reduce unnecessary information transmission, and avoid a trouble caused to a user and a maintenance party.

(2) When the vehicle is in the maintenance mode, set the intelligent management function of the head unit and/or the client to an available state.

In some optional implementations, a user may alternatively set, on the head unit or the client, use of the intelligent management function not to be suspended, or apply for enabling the intelligent management function after setting use of these functions to be suspended. In this case, application information and permission information may be transmitted between the client and the head unit by using a cloud. A vehicle-mounted screen or the client may display corresponding application content, for example, "The vehicle owner does not disable the remote control function, and whether to agree", or "The vehicle owner applies for enabling the remote control function, and whether to agree". The head unit and the client determine whether to agree based on an instruction entered by an operator, and send a result to the peer end.

Optionally, priorities of the head unit and the client may be set. If a priority of the head unit is higher than that of the client, whether to enable the intelligent management function is determined based on a feedback of the head unit. Optionally, a default rule may alternatively be set. In the maintenance mode, a result that meets the default rule is used. This is not specifically limited herein.

The following describes a process in which the head unit or the client applies for enabling the intelligent management function after setting the intelligent management functions of the vehicle and the client to the suspended state.

1.1 The head unit applies for enabling the intelligent management function.

In some optional implementations, after the intelligent management function of the vehicle is set to the suspended state, if the vehicle is in the non-factory mode, the head unit may apply to the client for enabling the intelligent management function. Specifically, the head unit may send the first application information to the client, where the first application information indicates to enable the intelligent management function. If the client allows enabling of the intelligent management function, the head unit obtains first permission information from the client, and sets the intelligent management function to an available state based on the first permission information. The first application information or the first permission information may be directly transmitted between the client and the head unit, or may be forwarded by using the cloud. This is not specifically limited herein.

For example, an example in which the first application information indicates to enable an audio-visual entertainment function is used for description with reference to a diagram.

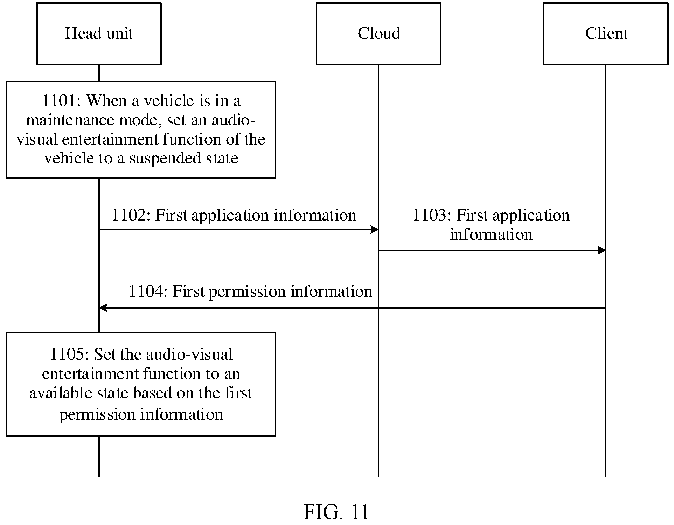

FIG. 11 is a schematic flowchart of a vehicle control method according to an embodiment of this application. The method includes the following steps.

1101: When a vehicle is in a maintenance mode, a head unit sets an audio-visual entertainment function of the vehicle to a suspended state.

The audio-visual entertainment function includes functions, such as audio and video playing, e-book reading, real-world navigation, and map display, and these functions bring rich audio-visual experience to a user. A default program may be set, so that when the vehicle is in the maintenance mode, the head unit disables the audio-visual entertainment function of the vehicle.

1102: The head unit sends first application information to a cloud.

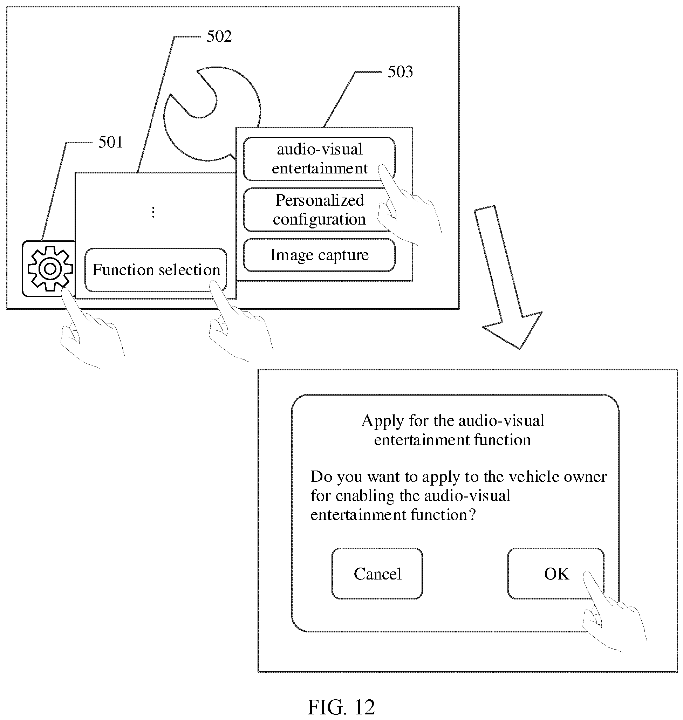

The first application information indicates an application for enabling the audio-visual entertainment function. The following describes step 1102 with reference to FIG. 12. FIG. 12 is a diagram of an interface of a vehicle-mounted screen according to an embodiment of this application.

In some optional implementations, as shown in an upper figure in FIG. 12, a head unit displays a menu interface 502 in response to a touch instruction for a setting control 501. Then, a function menu 503 is displayed in response to a touch instruction for a "Function selection" control in the menu interface 502. An operator taps an "Audio-visual entertainment" control in the function menu 503, and the head unit controls, in response to this operation, the vehicle-mounted screen to display a confirmation interface shown in a lower figure in FIG. 12. The operator taps an "OK" control in the confirmation interface, to send first application information to a cloud. The first application information indicates to enable an audio-visual entertainment function of a vehicle.

1103: The cloud forwards the first application information to a client.

After receiving the first application information sent by the head unit, the cloud forwards the information to the client.

1104: The client sends first permission information to the head unit.

After obtaining the first application information, the client responds to the first application information. Optionally, the client may send the first permission information to the head unit, where the first permission information indicates to enable the audio-visual entertainment function.

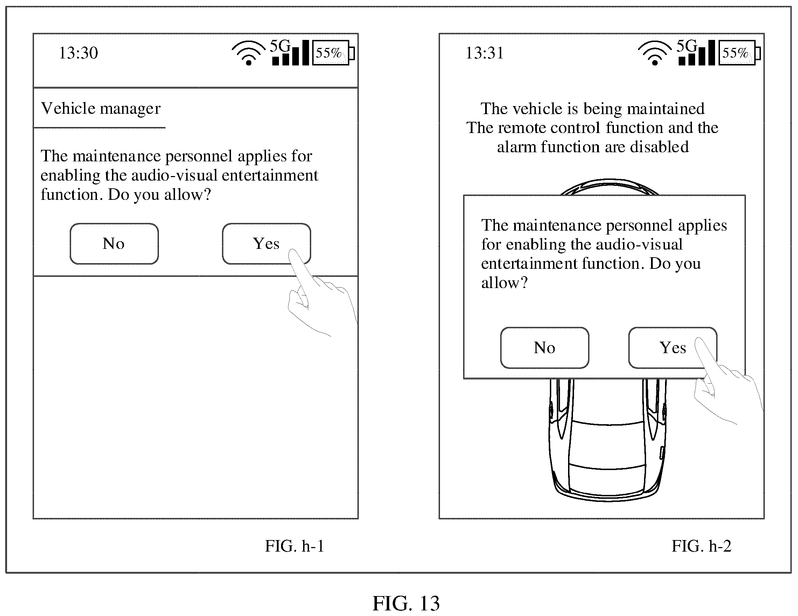

The following describes step 1104 with reference to FIG. 13. FIG. 13 is a diagram of an interface of a client according to an embodiment of this application.

For example, as shown in FIG. h-1 in FIG. 13, a notification bar of the client notifies a user that maintenance personnel applies for enabling an audio-visual entertainment function, and prompts the user to determine whether to allow this operation. If the user taps a control "Yes", the client sends first permission information to a head unit.

For example, as shown in FIG. h-2 in FIG. 13, a pop-up window may be further used on a home page of an app to notify the user that the maintenance personnel applies for enabling the audio-visual entertainment function, and prompt the user to determine whether to allow the operation. Similarly, if the user taps the control "Yes", the client sends first permission information to the head unit.

It should be noted that FIG. 13 is merely an example of a client interface. During actual application, there may be a plurality of cases of content displayed in the notification bar or content displayed on the home page of the app, provided that the user can be notified that the maintenance personnel applies for enabling the audio-visual entertainment function, and that the user can be prompted to determine whether to allow the operation. This is not specifically limited herein.

1105: The head unit sets the audio-visual entertainment function to an available state based on the first permission information.

After obtaining the first permission information, the head unit sets the audio-visual entertainment function to the available state based on the first permission information.

It should be noted that, in the embodiment shown in FIG. 11, the first application information is sent by the head unit to the cloud, and then forwarded by the cloud to the client. During actual application, the first application information may be directly sent by the head unit to the client. Alternatively, the operator may perform an operation on a cloud platform, so that the cloud obtains the first application information, and then forwards the first application information to the client. This is not specifically limited herein. In other words, a transmission path of the first application information has the following several cases: the head unit → the cloud → the client; or the head unit → the client; or the cloud → the client. During actual application, the transmission path may be selected according to a requirement. This is not specifically limited herein.

It should be noted that, in the embodiment shown in FIG. 11, the first permission information is directly sent by the client to the head unit. During actual application, the first permission information may alternatively be sent by the client to the cloud, and then forwarded by the cloud to the head unit. This is not specifically limited herein. In other words, that the head unit obtains the first permission information from the client includes: The head unit directly receives the first permission information from the client, or the head unit receives the first permission information from the client by using the cloud. This is not specifically limited herein.

In this embodiment of this application, when the vehicle is in the maintenance mode and the intelligent management function of the vehicle is set to the suspended state by default, the intelligent management function can be restored at a request of the head unit to the client, so that an operator can easily determine whether a related function is successfully maintained. This further improves practicability of the technical solutions of this application. For example, when the vehicle is in the maintenance mode, the audio-visual entertainment function of the vehicle may be set to the suspended state by default. The application is sent to the client by using the head unit or the cloud, so that the audio-visual entertainment function can be restored, and the maintenance personnel can detect whether a component related to the audio-visual entertainment function is successfully maintained, or the maintenance personnel also has good audio-visual experience in a working process. In addition, there are a plurality of transmission paths for transmitting the application information and the permission information in restoration of the audio-visual entertainment function. This enriches implementations of the technical solutions of this application.

Similarly, in this embodiment of this application, when the vehicle is in the maintenance mode, a personalized configuration function of the vehicle may be set to the suspended state by default. The personalized configuration function can be restored by applying to the client by using the head unit or the cloud, so that the maintenance personnel can detect whether a component related to the personalized configuration function is successfully maintained, or the maintenance personnel can perform maintenance in a comfortable environment. This avoids inconvenience caused by setting of a vehicle owner. In addition, there are a plurality of transmission paths for the application information and the permission information that are transmitted in restoration of the personalized configuration function. This enriches implementations of the technical solutions of this application.

1.2 The client applies for enabling the intelligent management function.

In this embodiment of this application, in addition to the head unit that may trigger restoration of the intelligent management function, the client may further trigger restoration of the intelligent management function.

In some optional implementations, after the intelligent management function of the vehicle is set to the suspended state, the head unit may obtain second application information from the client, where the second application information indicates to enable the intelligent management function; control the vehicle-mounted screen to display an application interface corresponding to the second application information; and set the intelligent management function to an available state in response to a fourth touch instruction for the vehicle-mounted screen, where the fourth touch instruction indicates to enable the intelligent management function. The first application information may be directly transmitted between the client and the head unit, or may be forwarded by using a cloud. This is not specifically limited herein.

For example, an example in which the second application information indicates to enable the image capture function is used for description with reference to a diagram.

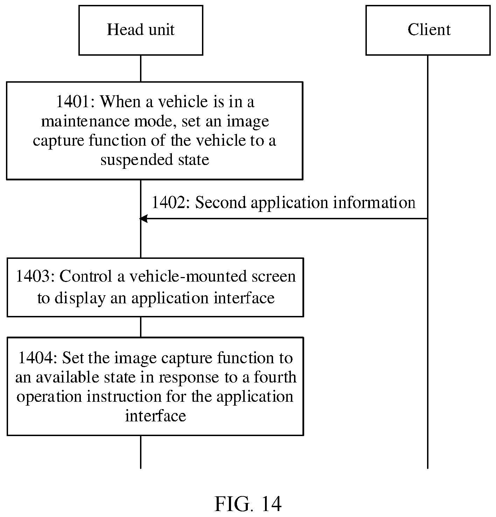

In the following, FIG. 14 is a schematic flowchart of a vehicle control method according to an embodiment of this application. The method includes the following steps.

1401: When a vehicle is in a maintenance mode, set an image capture function of the vehicle to a suspended state.

The image capture function refers to a function, for example, photographing, video recording, or video calling by using an image capture device (for example, a vehicle-mounted camera). When the vehicle is in the maintenance mode, in consideration of protecting privacy of an operator in the vehicle, a default program may be set, so that when the vehicle is in the maintenance mode, a head unit sets the image capture function of the vehicle to the suspended state.

1402: A client sends second application information to the head unit.

A user operates the client, so that the client sends the second application information to the head unit, where the second application information indicates an application for enabling the image capture function, and the image capture function is used to capture an image.

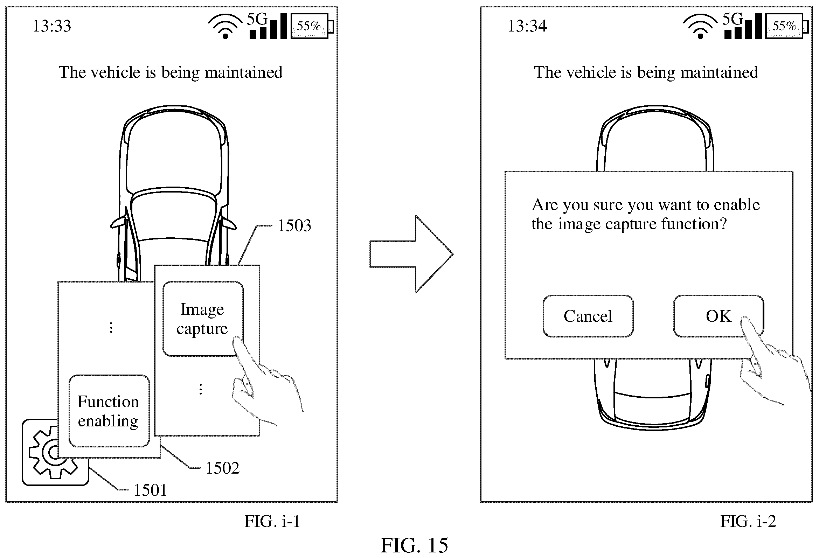

The following describes step 1402 with reference to FIG. 15. FIG. 15 is a diagram of an interface of a client according to an embodiment of this application.

In some optional implementations, as shown in FIG. i-1 in FIG. 15, the client displays a menu interface 1502 in response to a touch instruction for a setting control 1501; and displays a function menu 1503 in response to a touch instruction for a "Function enabling" control in the menu interface 1502. A user taps an "Image" control in the function menu 1503, and the client controls, in response to this operation, a vehicle-mounted screen to display a confirmation interface shown in FIG. i-2 in FIG. 15. The user taps an "OK" control in confirmation, and the client sends, in response to this operation, second application information to a head unit.

In some optional implementations, a user taps an "Image" control in the function menu 1503, and the client may send second application information to a head unit in response to this operation, and may not display a confirmation interface shown in FIG. i-2.

1403: The head unit obtains the second application information from the client, and controls the vehicle-mounted screen to display an application interface.

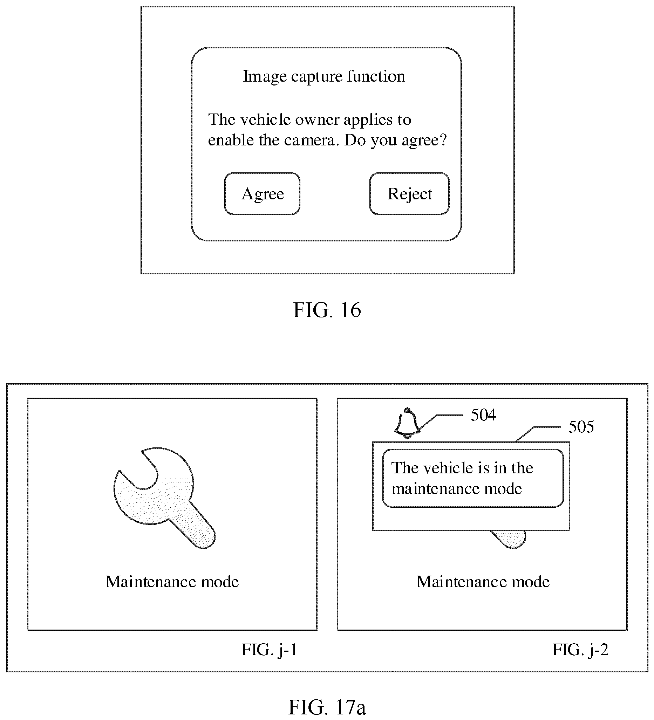

The head unit obtains the second application information sent by the client, and may control the vehicle-mounted screen to display an application interface shown in FIG. 16, to prompt an operator in a vehicle to process an application of the user.

1404: The head unit sets an image capture function to an available state in response to a fourth operation instruction for the application interface.

If the operator in the vehicle taps an "Agree" control in FIG. 16, the head unit sets, in response to this operation (that is, in response to the fourth operation instruction), the image capture function to the available state. Optionally, in this case, the client may receive second permission information corresponding to the second application information, and display, on an interface of the client, a prompt similar to "The image capture function is enabled", to provide a prompt for the user.

It should be noted that FIG. 15 and FIG. 16 are merely diagrams of the interface of the client and the interface of the vehicle-mounted screen. During actual application, interface setting may be another case, provided that a function in the foregoing description can be represented. This is not specifically limited herein.

It should be noted that, in the description of step 1401 to step 1404, an example in which the head unit directly interacts with the client is used for description. During actual application, the second application information and/or the second permission information may be similar to the first application information and/or the first permission information described in the embodiment shown in FIG. 11. The first application information and/or the first permission information may alternatively be forwarded by using a cloud. This is not specifically limited herein.

In this embodiment of this application, when the vehicle is in the maintenance mode, and the intelligent management function of the vehicle is set to the suspended state by default, use of the intelligent management function may also be restored through application of the client, so that a vehicle owner learns of related maintenance information. This further improves practicability of the technical solutions of this application. For example, when the vehicle is in the maintenance mode, the image capture function of the vehicle may be set to the suspended state by default. The image capture function is restored only after the application is submitted to the head unit through the client and confirmed by the operator in the vehicle. This protects privacy of the operator (for example, maintenance personnel) in the vehicle.

In some optional implementations, when the vehicle is in the maintenance mode, the head unit may control the vehicle-mounted screen to display a maintenance interface. For example, FIG. 17a is a diagram of an interface of a vehicle-mounted screen according to an embodiment of this application.

As shown in FIG. 17a, when a vehicle is in a maintenance mode, a head unit may control the vehicle-mounted screen to display a maintenance interface. The maintenance interface may include a maintenance-dedicated wallpaper as shown in FIG. j-1 in FIG. 17a, or may further include a notification control 504 as shown in FIG. j-2 in FIG. 17a. This is not specifically limited herein.

The head unit displays, in response to an operation instruction for the notification control 504, a notification interface 505. The notification interface displays a notification word "The vehicle is in the maintenance mode", to notify an operator of the current mode of the vehicle. It may be understood that the notification control 504, the notification interface 505, and the notification word are merely examples. During actual application, an icon of the notification control 504 may alternatively be in another shape, and a location, a size, and a notification word of the notification interface 505 may be different. This is not specifically limited herein. For example, a maintenance interface may not include the notification control 504. The operator may pull down a notification bar, and the vehicle-mounted screen displays the notification interface 505.

In this embodiment of this application, when the vehicle is in the maintenance mode, the vehicle-mounted screen may be controlled to display the maintenance interface, so that an operator can intuitively learn of a current status of the vehicle. This further improves user experience.

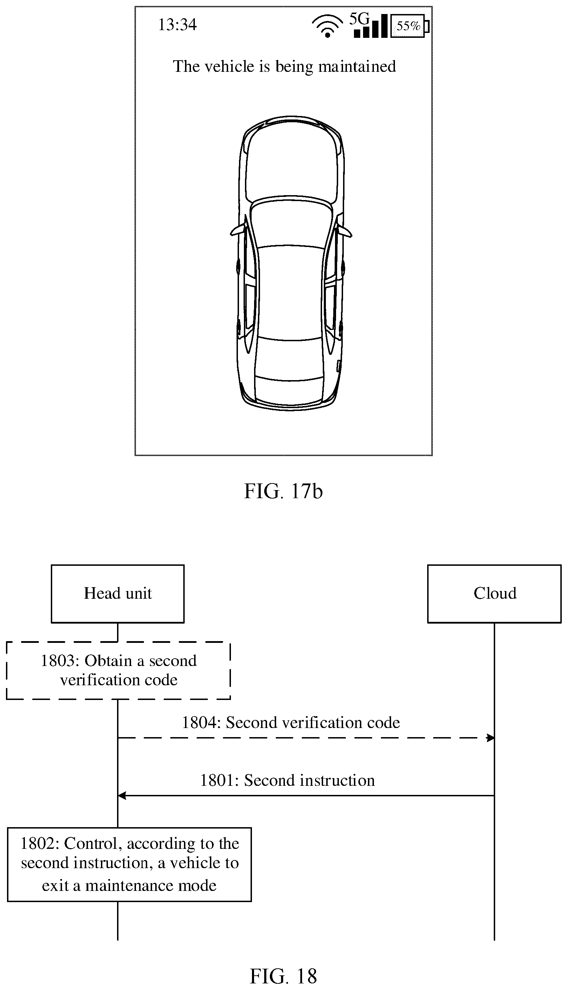

In some optional implementations, when the vehicle is in the maintenance mode, a client may display an interface shown in FIG. 17b, to notify a user of the current mode of the vehicle.

In some optional implementations, when the vehicle is in the maintenance mode and the vehicle is restarted, the head unit can control the restarted vehicle to be in the maintenance mode. Restarting the vehicle includes a process in which an entire vehicle component is powered off and then powered on.

In this embodiment of this application, when the vehicle is restarted when the vehicle is in the maintenance mode, the restarted vehicle can be controlled to be in the maintenance mode, so that incorrect exit of the maintenance mode is avoided, that is, inconvenience caused by incorrect exit of the maintenance mode is prevented.

Next, a case of exiting the maintenance mode is described. When the vehicle is in the factory mode or the non-factory mode, manners of exiting the maintenance mode are different, and descriptions are separately provided below.
(1) The vehicle is in the non-factory mode.

FIG. 18 is a schematic flowchart of a vehicle control method according to an embodiment of this application. The method includes the following steps.

1801: A cloud sends a second instruction to a head unit.

When the vehicle is in the non-factory mode, after this maintenance is completed, the cloud may settle a maintenance work order, and deliver a second instruction to the head unit after the settlement is completed. The second instruction controls the vehicle end to enter a maintenance mode. The settlement completion includes that a user pays maintenance expenses through a cloud service platform, or a user pays maintenance expenses in another manner, and an operator enters settlement completion information (for example, confirms that the user has paid the maintenance expenses) through the cloud service platform. In addition, the cloud may further obtain the second instruction in another manner. For example, the cloud obtains the second instruction in response to an operation instruction for the cloud service platform (for example, the operator taps on a web page to exit the maintenance mode).

1802: The head unit controls, according to the second instruction, the vehicle to exit the maintenance mode.

After obtaining the second instruction, the head unit may control, according to the second instruction, the vehicle to exit the maintenance mode.

In some optional implementations, some conditions further need to be met when the head unit controls, according to the second instruction, the vehicle to exit the maintenance mode. That is, before step 1801, the method further includes the following step.

1803: The head unit obtains a second verification code.

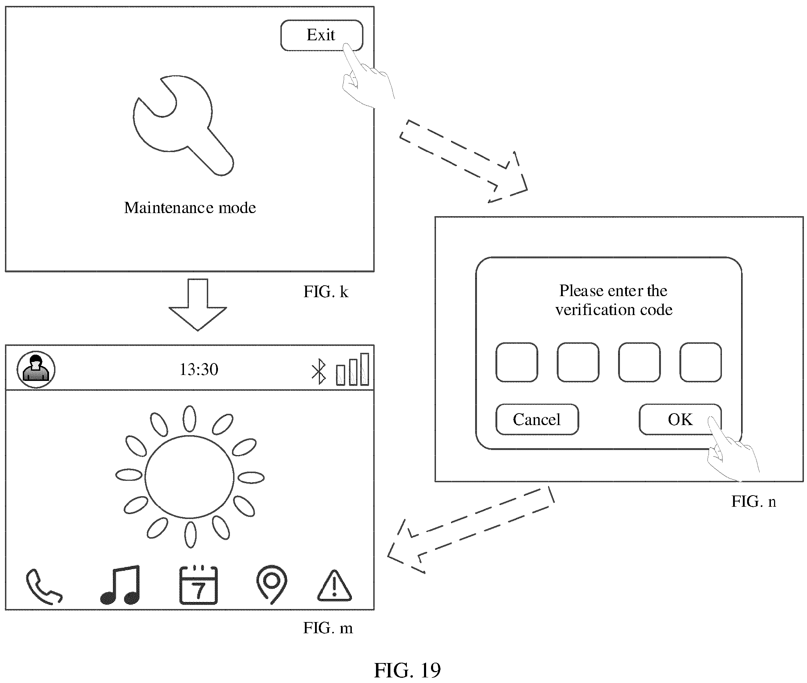

For clarity of description, step 1803 is described with reference to a diagram. FIG. 19 is a diagram of a vehicle-mounted screen according to an embodiment of this application.

As shown in FIG. k in FIG. 19, when the vehicle is in the maintenance mode, the maintenance interface displayed on the vehicle-mounted screen may further include an "Exit" control. The operator taps the "Exit" control, and the head unit displays, in response to the operation, a verification interface shown in FIG. n. The operator enters a second verification code on the interface, so that the head unit obtains the second verification code.

Optionally, the second verification code may be the same as the first verification code used to enter the maintenance mode in the non-factory mode. Alternatively, the second verification code may be different from the first verification code, and the operator may re-apply for the second verification code from the cloud. A process of applying for the second verification code is similar to a process of applying for the first verification code. Refer to the foregoing related descriptions of applying for the first verification code. Details are not described herein again.

1804: The head unit sends the second verification code to the cloud.

After obtaining the second verification code, the head unit sends the second verification code to the cloud. With reference to FIG. 19, the operator enters the second verification code on the verification interface shown in FIG. n, and taps an "OK" control. The head unit sends the second verification code to the cloud in response to a touch instruction for the "OK" control.

The cloud checks the second verification code to obtain a second check result, and sends the second check result to the head unit as a basis for determining whether the head unit controls the vehicle to exit the maintenance mode. The second check result indicates that the verification of the second verification code succeeds or fails. That the verification of the second verification code succeeds means that the second verification code is the same as verification code generated by the cloud, and a status corresponding to the maintenance work order is completed. In other words, a processed completed work order corresponding to the second verification code exists in a work order management system on the cloud. When the second check result indicates that the verification succeeds, the head unit controls, according to the second instruction, the vehicle to exit the maintenance mode, and controls the vehicle-mounted screen to display a user interface shown in FIG. m. The user interface may be an interface set by a vehicle owner, or may be a system default interface in a non-maintenance mode. This is not specifically limited herein.

It should be noted that the second check result may be carried in the second instruction, or the cloud may send the second check information to the head unit based on the embodiment shown in FIG. 18. The second check information includes the second check result.

In this embodiment of this application, when the vehicle is in the non-factory mode, the head unit determines, based on the second check result, whether to control, according to the second instruction, the vehicle to exit the maintenance mode. This can effectively prevent the vehicle from exiting the maintenance mode by mistake caused by a misoperation, and further improve user experience.

(2) The vehicle is in the factory mode.

If the vehicle is in the factory mode, the head unit may control, in response to a third operation instruction for the vehicle-mounted screen, the vehicle to exit the maintenance mode, where the third operation instruction indicates to exit the maintenance mode.

As shown in FIG. k in FIG. 19, when the vehicle is in the factory mode and is in the maintenance mode, the maintenance interface displayed on the vehicle-mounted screen may further include an "Exit" control. The operator taps the "Exit" control, and the head unit controls, in response to this operation (that is, the third operation instruction), the vehicle to exit the maintenance mode, and displays a user interface shown in FIG. m. The user interface may be an interface set by a vehicle owner, or may be a system default interface in a non-maintenance mode. This is not specifically limited herein.

It should be noted that FIG. 19 is merely an example of the vehicle-mounted screen when the vehicle exits the maintenance mode, and does not limit a layout of the vehicle-mounted screen during actual application, provided that the foregoing functions can be implemented. This is not specifically limited herein.

In this embodiment of this application, in different vehicle modes, manners in which the head unit controls the vehicle to exit the maintenance mode are different. This enriches application scenarios of the technical solutions of this application.

In this embodiment of this application, when the maintenance mode is exited, the head unit may further control the vehicle-mounted screen to display the user interface. The user interface can be returned without user setting. This provides convenience for a user.

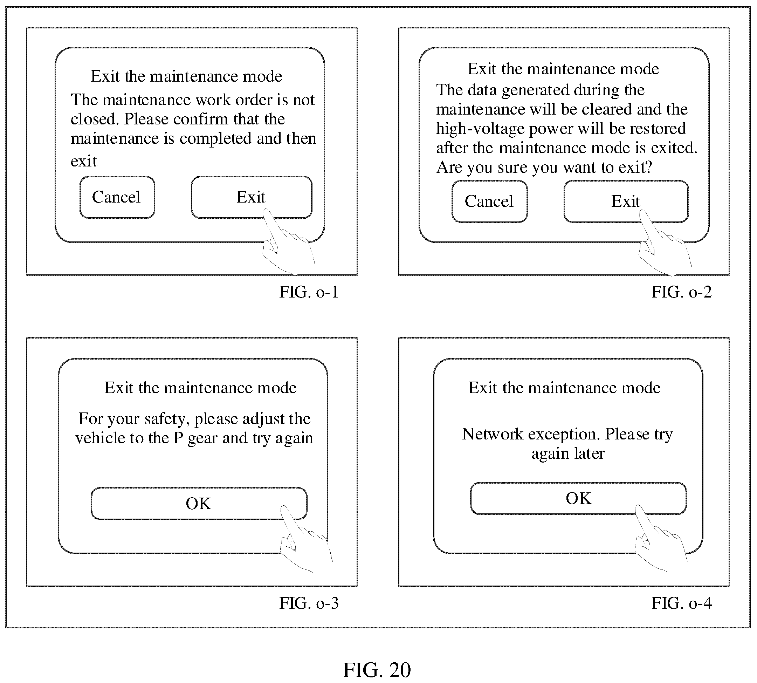

In some optional implementations, before and after the vehicle-mounted screen displays the interface shown in FIG. n in FIG. 19, the head unit further detects a vehicle status, a work order status, and the like, and displays an interface shown in FIG. 20. FIG. 20 is a diagram of an interface of a vehicle-mounted screen according to an embodiment of this application.

Optionally, in a process of exiting the maintenance mode, the head unit may send query information to the cloud to query a status of a maintenance work order corresponding to the current maintenance mode. If the maintenance work order is not closed, it means that this maintenance may not be completed, and the head unit may control the vehicle-mounted screen to display an interface shown in FIG. o-1 in FIG. 20, to provide a prompt for an operator. In this case, the operator can tap a "Cancel" control to close the maintenance work order. Alternatively, the operator may tap the "Exit" control to ignore this prompt.

Optionally, the head unit may control the vehicle-mounted screen to display an interface shown in FIG. o-2 in FIG. 20, to notify the operator of a result of exiting the maintenance mode, so that the operator can also be prevented from exiting the maintenance mode by mistake.

Optionally, when the vehicle is not in a static state, the head unit may control the vehicle-mounted screen to display an interface shown in FIG. o-3 in FIG. 20, to avoid a security risk.

Optionally, during a network exception, the head unit may control the vehicle-mounted screen to display an interface shown in FIG. o-4 in FIG. 20, to provide a prompt for the operator.

In this embodiment of this application, when the vehicle exits the maintenance mode, the head unit and/or the client sets the intelligent management function to an available state. The intelligent management function includes at least one of the following: a remote control function, an alarm function, an audio-visual entertainment function, a personalized configuration function, or an image capture function.

In some optional implementations, when the maintenance mode is exited, the head unit may automatically set the suspended intelligent management function to an available state, that is, restore the intelligent management function suspended in the maintenance mode.

In some optional implementations, when the maintenance mode is exited, the head unit may set, according to an instruction from the cloud, the suspended intelligent management function to an available state. This is not specifically limited herein.

For example, when the maintenance mode is exited, the head unit may set the remote control function of the vehicle to the available state. Optionally, in this case, the head unit may further control the vehicle-mounted screen to display a prompt interface, or restore a function of a related control, to notify the operator that use of the remote control function is restored (that is, the remote control function is available). Optionally, the head unit may directly restore the remote control function without prompt. This is not specifically limited herein.

For example, when the maintenance mode is exited, the head unit may set the alarm function of the vehicle to an available state. Optionally, in this case, the head unit may further control the vehicle-mounted screen to display a prompt interface, or restore a function of a related control, to notify the operator that use of the alarm function is restored (that is, the alarm function is available). Optionally, the head unit may directly restore the alarm function without prompt. This is not specifically limited herein.

In this embodiment of this application, when the maintenance mode is exited, the head unit can restore, without user setting, the function suspended in the maintenance mode. This simplifies an operation of the user.

In some optional implementations, the head unit sends second notification information to the client, where the second notification information indicates to restore use of the intelligent management function of the client. The client obtains the second notification information from the head unit, and sets the intelligent management function of the client to an available state based on the second notification information. The second notification information may be directly sent by the head unit to the client, or may be sent by the head unit to the cloud and forwarded by the cloud to the client. This is not specifically limited herein.

In some optional implementations, when or after sending, to the head unit, the second instruction that indicates the vehicle to enter the maintenance mode, the cloud sends second notification information to the client, where the second notification information indicates to restore use of the intelligent management function of the client. The client obtains the second notification information from the head unit, and sets the intelligent management function of the client to an available state based on the second notification information.

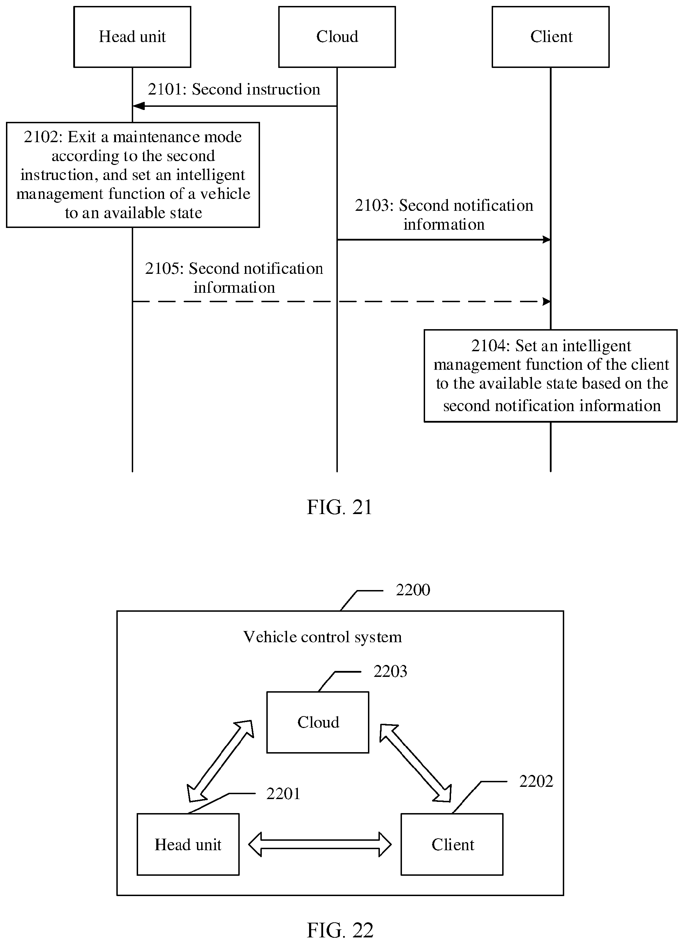

The following provides description with reference to a diagram. FIG. 21 is a schematic flowchart of a vehicle control method according to an embodiment of this application. The method includes the following steps.

2101: A cloud sends a second instruction to a head unit.

The second instruction indicates a vehicle to exit a maintenance mode, and indicates to set an intelligent management function of the vehicle to an available state.

2102: The head unit exits the maintenance mode according to the second instruction, and sets the intelligent management function of the vehicle to the available state.

2103: The cloud sends second notification information to a client.

The second notification information indicates to restore use of an intelligent management function of the client.

2104: The client sets intelligent management of the client to the available state based on the second notification information.

In some optional implementations, step 2103 may be replaced with the following step.

2105: The head unit sends second notification information to a client.

It may be understood that a specific implementation process of step 2101 to step 2105 is described above. Details are not described herein again.

In this embodiment of this application, when the maintenance mode is exited, the client can restore, without user setting, a function suspended in the maintenance mode. This simplifies an operation of the user.

The following describes a vehicle control system and a related device that are provided in embodiments of this application.

FIG. 22 is a diagram of a structure of a vehicle control system according to an embodiment of this application.

As shown in FIG. 22, a vehicle control system 2200 includes a head unit 2201. The head unit 2201 is configured to perform operations performed by the head unit in the embodiments shown in FIG. 1a to FIG. 21.

In some optional implementations, the vehicle control system 2200 further includes a client 2202, and the client 2202 is configured to perform operations performed by a client in the embodiments shown in FIG. 1a to FIG. 21.

In some optional implementations, the vehicle control system 2200 further includes a cloud 2203, and the cloud 2203 is configured to perform operations performed by the cloud in the embodiments shown in FIG. 1a to FIG. 21.

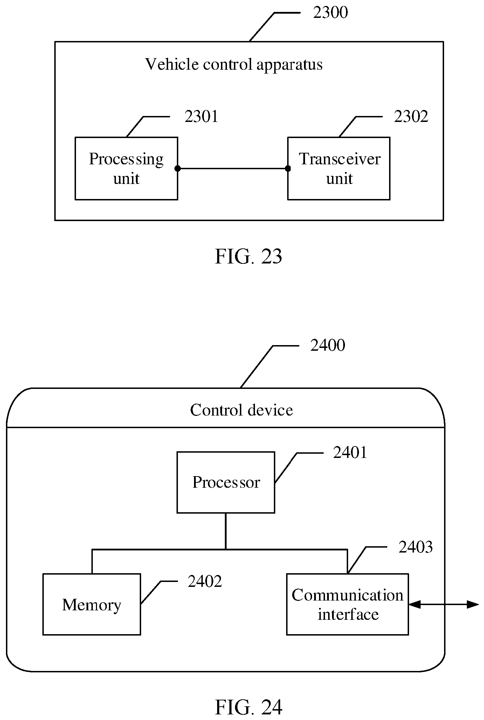

FIG. 23 is a diagram of a structure of a vehicle control apparatus according to an embodiment of this application. As shown in FIG. 23, a vehicle control apparatus 2300 includes a processing unit 2301 and a transceiver unit 2302.

In some optional implementations, the vehicle control apparatus 2300 corresponds to a head unit, and the transceiver unit 2302 is configured to perform the obtaining operation and the sending operation that are performed by the head unit in the embodiments shown in FIG. 1a to FIG. 21. The processing unit 2301 is configured to perform operations other than the obtaining operation and the sending operation that are performed by the head unit in the embodiments shown in FIG. 1a to FIG. 21. Details are described below.

In some optional implementations, the processing unit 2301 is configured to determine that a vehicle is in a maintenance mode; and when the vehicle is in the maintenance mode, control data access space of the vehicle to be maintenance data space, where the maintenance data space is isolated from user data space in which user data is stored.

In some optional implementations, the processing unit 2301 is configured to start or restart the vehicle or a head unit of the vehicle; and create the maintenance data space after the vehicle or the head unit is started or restarted.

In some optional implementations, the maintenance data space is preset data space.

In some optional implementations, the transceiver unit 2302 is further configured to obtain a first operation instruction for a vehicle-mounted screen, where the first operation instruction indicates to enable a data isolation function; and obtain status information of the vehicle and maintenance data space information.

The processing unit 2301 is further configured to: if the status information of the vehicle meets a status condition, and the data space information indicates that the maintenance data space exists, control, in response to the first operation instruction, the data access space of the vehicle to be the maintenance data space.

In some optional implementations, the transceiver unit 2302 is further configured to: if the vehicle is in a non-factory mode, obtain a first instruction from a cloud, where the first instruction indicates the vehicle to enter the maintenance mode; and obtain the status information of the vehicle.

The processing unit 2301 is further configured to: if the vehicle is in the non-factory mode and the status information of the vehicle meets the status condition, control, according to the first instruction, the vehicle to enter the maintenance mode; or if the vehicle is in a factory mode and the status information of the vehicle meets the status condition, control, in response to a second operation instruction for the vehicle-mounted screen, the vehicle to enter the maintenance mode, where the second operation instruction indicates to enter the maintenance mode.

In some optional implementations, the transceiver unit 2302 is further configured to: send a first verification code to the cloud, where the first verification code is used to request to enter the maintenance mode; and obtain a first check result from the cloud, where the first check result corresponds to the first verification code.

The processing unit 2301 is further configured to: if the first check result indicates that verification succeeds, control, according to the first instruction, the vehicle to enter the maintenance mode.

In some optional implementations, the status information includes motion status information, network status information, and system status information. That the status information of the vehicle meets a status condition includes: The motion status information indicates that the vehicle is in a static state, the network status information indicates that a network of the vehicle is normal, and the system status information indicates that a system of the vehicle is normal.

In some optional implementations, the transceiver unit 2302 is further configured to send the maintenance data to the cloud.

In some optional implementations, the processing unit 2301 is further configured to: if the vehicle is in the factory mode, control, in response to a third operation instruction for the vehicle-mounted screen, the vehicle to exit the maintenance mode, where the third operation instruction indicates to exit the maintenance mode; or the transceiver unit 2302 is further configured to: if the vehicle is in the non-factory mode, obtain a second instruction from the cloud, where the second instruction indicates the vehicle to exit the maintenance mode. The processing unit 2301 is further configured to control, according to the second instruction, the vehicle to exit the maintenance mode.

In some optional implementations, the transceiver unit 2302 is further configured to send a second verification code to the cloud, where the second verification code is used to request to exit the maintenance mode; and obtain a second check result from the cloud, where the second check result corresponds to the second verification code.

The processing unit 2301 is further configured to: if the second check result indicates that verification succeeds, control, according to the second instruction, the vehicle to exit the maintenance mode.

In some optional implementations, the processing unit 2301 is further configured to: when the vehicle exits the maintenance mode, delete the maintenance data stored in the maintenance data space.

In some optional implementations, the processing unit 2301 is further configured to: when the vehicle is in the maintenance mode, set an intelligent management function of the vehicle to a suspended state, where the intelligent management function includes at least one of the following: a remote control function, an alarm function, an audio-visual entertainment function, a personalized configuration function, or an image capture function; and set the intelligent management function to an available state when the vehicle exits the maintenance mode.

In some optional implementations, the processing unit 2301 is further configured to: send first notification information to a client when the vehicle is in the maintenance mode, where the first notification information indicates to suspend use of an intelligent management function of the client; and send second notification information to the client when the vehicle exits the maintenance mode, where the second notification information indicates to enable the intelligent management function of the client.

In some optional implementations, the transceiver unit 2302 is further configured to: send first application information to the client, where the first application information indicates to enable the intelligent management function; and obtain first permission information from the client, where the first permission information corresponds to the first application information.

The processing unit 2301 is further configured to set the intelligent management function to the available state based on the first permission information.

In some optional implementations, the transceiver unit 2302 is further configured to obtain second application information from the client, where the second application information indicates to enable the intelligent management function.

The processing unit 2301 is further configured to control the vehicle-mounted screen to display an application interface corresponding to the second application information; and set the intelligent management function to the available state in response to a fourth operation instruction for the vehicle-mounted screen, where the fourth operation instruction indicates to enable the intelligent management function.

In some optional implementations, the processing unit 2301 is further configured to: when the vehicle is in the maintenance mode and the vehicle is restarted, control the restarted vehicle to be in the maintenance mode.

In some optional implementations, the processing unit 2301 is further configured to: when the vehicle is in the maintenance mode, control the vehicle-mounted screen to display a maintenance interface; and when the maintenance mode is exited, control the vehicle-mounted screen to display a user interface.

In some optional implementations, the vehicle control apparatus 2300 corresponds to the client, and the transceiver unit 2302 is configured to perform the obtaining operation and the sending operation that are performed by the client in the embodiments shown in FIG. 1a to FIG. 21. The processing unit 2301 is configured to perform operations other than the obtaining operation and the sending operation that are performed by the client in the embodiments shown in FIG. 1a to FIG. 21. Details are described below.

In some optional implementations, the transceiver unit 2302 is configured to: when a vehicle is in a maintenance mode, obtain first notification information from a cloud or a head unit, where the first notification information indicates that use of an intelligent management function of a client is suspended, and the intelligent management function includes at least one of the following: a remote control function, an alarm function, an audio-visual entertainment function, a personalized configuration function, or an image capture function.

The processing unit 2301 is configured to set the intelligent management function to a suspended state based on the first notification information.

In some optional implementations, the transceiver unit 2302 is further configured to obtain first application information from the head unit or the cloud, where the first application information indicates to enable the intelligent management function.

The processing unit 2301 is further configured to set the intelligent management function to an available state based on the first application information.

In some optional implementations, the transceiver unit 2302 is further configured to: send second application information to the head unit or the cloud, where the second application information indicates to enable the intelligent management function; and obtain permission information from the head unit or the cloud, where the permission information corresponds to the second application information.

The processing unit 2301 is further configured to set the intelligent management function to the available state based on the permission information.

In some optional implementations, the transceiver unit 2302 is further configured to: when the vehicle exits the maintenance mode, obtain second notification information from the cloud or the head unit, where the second notification information indicates to enable the intelligent management function of the client.

The processing unit 2301 is further configured to set the intelligent management function to the available state based on the second notification information.

In some optional implementations, the vehicle control apparatus 2300 corresponds to the cloud, and the transceiver unit 2302 is configured to perform the obtaining operation and the sending operation that are performed by the cloud in the embodiments shown in FIG. 1a to FIG. 21. The processing unit 2301 is configured to perform operations other than the obtaining operation and the sending operation that are performed by the cloud in the embodiments shown in FIG. 1a to FIG. 21. Details are described below.

In some optional implementations, the transceiver unit 2302 is configured to send a first instruction to a head unit, where the first instruction indicates a vehicle to enter a maintenance mode and indicates to set an intelligent management function of the vehicle to a suspended state, and the first indication is an instruction obtained after the cloud successfully checks a maintenance work order, or an instruction obtained by using a reserved interface. The intelligent management function includes at least one of the following: a remote control function, an alarm function, an audio-visual entertainment function, a personalized configuration function, or an image capture function.

In some optional implementations, the transceiver unit 2302 is further configured to: send first notification information to a client when the vehicle is in the maintenance mode, where the first notification information indicates to suspend use of an intelligent management function of the client.

In some optional implementations, the transceiver unit 2302 is further configured to send a second instruction to the head unit, where the second instruction indicates the vehicle to exit the maintenance mode and indicates to set the intelligent management function of the vehicle to an available state.

In some optional implementations, the transceiver unit 2302 is further configured to: when the vehicle exits the maintenance mode, send second notification information to the client, where the second notification information indicates to enable the intelligent management function of the client.

The following describes a control device provided in an embodiment of this application. FIG. 24 is a diagram of a structure of a control device according to an embodiment of this application. The control device 2400 includes a processor 2401 and a memory 2402, where the memory 2402 stores one or more applications or data.

The memory 2402 may be a volatile memory or a persistent memory. A program stored in the memory 2402 may include one or more modules, and each module may be configured to perform a series of operations performed by the control device 2400. Further, the processor 2401 may communicate with the memory 2402, and perform, on the control device 2400, a series of instruction operations in the memory 2402. The processor 2401 may be a central processing unit (central processing units, CPU), or may be a single-core processor. In addition, the processor 2401 may be another type of processor, for example, a dual-core processor. This is not specifically limited herein.

The control device 2400 may further include one or more communication interfaces 2403 and one or more operating systems, such as Windows Server^{™}, Mac OS X^{™}, Unix^{™}, Linux^{™}, and FreeBSD^{™}.

The control device 2400 may perform operations performed by the head unit, the cloud, or the client in the embodiments shown in FIG. 1a to FIG. 21. Details are not described herein again.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes: various media that can store program code, such as a USB flash drive, a removable hard disk, a read-only memory (read-only memory, ROM), a random access memory (random access memory, RAM), a magnetic disk, or a compact disc.

## Claims

1. A vehicle control method, comprising:
determining that a vehicle is in a maintenance mode; and
when the vehicle is in the maintenance mode, controlling data access space of the vehicle to be maintenance data space, wherein the maintenance data space is isolated from user data space in which user data is stored.

2. The method according to claim 1, wherein the method further comprises:
starting or restarting the vehicle or a head unit of the vehicle; and
creating the maintenance data space after the vehicle or the head unit is started or restarted.

3. The method according to claim 1, wherein the maintenance data space is preset data space.

4. The method according to any one of claims 1 to 3, wherein before the controlling data access space of the vehicle to be maintenance data space, the method further comprises:
obtaining a first operation instruction for a vehicle-mounted screen, wherein the first operation instruction indicates to enable a data isolation function; and
obtaining status information of the vehicle and maintenance data space information; and
the controlling data access space of the vehicle to be maintenance data space comprises:
if the status information of the vehicle meets a status condition, and the data space information indicates that the maintenance data space exists, controlling, in response to the first operation instruction, the data access space of the vehicle to be the maintenance data space.

5. The method according to any one of claims 1 to 4, wherein before the determining that a vehicle is in a maintenance mode, the method further comprises:
if the vehicle is in a non-factory mode, obtaining a first instruction from a cloud, wherein the first instruction indicates the vehicle to enter the maintenance mode; and
obtaining the status information of the vehicle; and
the determining that a vehicle is in a maintenance mode comprises:
if the vehicle is in the non-factory mode and the status information of the vehicle meets the status condition, controlling, according to the first instruction, the vehicle to enter the maintenance mode; or
if the vehicle is in a factory mode and the status information of the vehicle meets the status condition, controlling, in response to a second operation instruction for the vehicle-mounted screen, the vehicle to enter the maintenance mode, wherein the second operation instruction indicates to enter the maintenance mode.

6. The method according to claim 5, wherein before the controlling, according to the first instruction, the vehicle to enter the maintenance mode, the method further comprises:
sending a first verification code to the cloud, wherein the first verification code is used to request to enter the maintenance mode; and
obtaining a first check result from the cloud, wherein the first check result corresponds to the first verification code, and
the controlling, according to the first instruction, the vehicle to enter the maintenance mode comprises:
if the first check result indicates that verification succeeds, controlling, according to the first instruction, the vehicle to enter the maintenance mode.

7. The method according to any one of claims 4 to 6, wherein the status information comprises motion status information, network status information, and system status information; and
that the status information of the vehicle meets a status condition comprises:
the motion status information indicates that the vehicle is in a static state, the network status information indicates that a network of the vehicle is normal, and the system status information indicates that a system of the vehicle is normal.

8. The method according to any one of claims 1 to 7, wherein the maintenance data space is configured to store maintenance data; and
the method further comprises: sending the maintenance data to the cloud.

9. The method according to any one of claims 1 to 8, wherein the method further comprises:
if the vehicle is in the factory mode, controlling, in response to a third operation instruction for the vehicle-mounted screen, the vehicle to exit the maintenance mode, wherein the third operation instruction indicates to exit the maintenance mode; or
if the vehicle is in the non-factory mode, obtaining a second instruction from the cloud, wherein the second instruction indicates the vehicle to exit the maintenance mode; and
controlling, according to the second instruction, the vehicle to exit the maintenance mode.

10. The method according to claim 9, wherein before the controlling, according to the second instruction, the vehicle to exit the maintenance mode, the method further comprises:
sending a second verification code to the cloud, wherein the second verification code is used to request to exit the maintenance mode; and
obtaining a second check result from the cloud, wherein the second check result corresponds to the second verification code, and
the controlling, according to the second instruction, the vehicle to exit the maintenance mode comprises:
if the second check result indicates that verification succeeds, controlling, according to the second instruction, the vehicle to exit the maintenance mode.

11. The method according to claim 9 or 10, wherein the method further comprises:
when the vehicle exits the maintenance mode, deleting the maintenance data stored in the maintenance data space.

12. The method according to any one of claims 1 to 11, wherein the method further comprises:
when the vehicle is in the maintenance mode, setting an intelligent management function of the vehicle to a suspended state, wherein the intelligent management function comprises at least one of the following: a remote control function, an alarm function, an audio-visual entertainment function, a personalized configuration function, or an image capture function; and
setting the intelligent management function to an available state when the vehicle exits the maintenance mode.

13. The method according to any one of claims 1 to 12, wherein the method further comprises:
sending first notification information to a client when the vehicle is in the maintenance mode, wherein the first notification information indicates to suspend use of an intelligent management function of the client; and
sending second notification information to the client when the vehicle exits the maintenance mode, wherein the second notification information indicates to enable the intelligent management function of the client.

14. The method according to claim 12 or 13, wherein after the setting an intelligent management function of the vehicle to a suspended state, the method further comprises:
sending first application information to the client, wherein the first application information indicates to enable the intelligent management function;
obtaining first permission information from the client, wherein the first permission information corresponds to the first application information; and
setting the intelligent management function to the available state based on the first permission information.

15. The method according to any one of claims 12 to 14, wherein after the setting an intelligent management function of the vehicle to a suspended state, the method further comprises:
obtaining second application information from the client, wherein the second application information indicates to enable the intelligent management function;
controlling the vehicle-mounted screen to display an application interface corresponding to the second application information; and
setting the intelligent management function to the available state in response to a fourth operation instruction for the vehicle-mounted screen, wherein the fourth operation instruction indicates to enable the intelligent management function.

16. The method according to claims 1 to 15, wherein the method further comprises:
when the vehicle is in the maintenance mode and the vehicle is restarted, controlling the restarted vehicle to be in the maintenance mode.

17. The method according to any one of claims 1 to 16, wherein the method further comprises:
when the vehicle is in the maintenance mode, controlling the vehicle-mounted screen to display a maintenance interface; and
when the maintenance mode is exited, controlling the vehicle-mounted screen to display a user interface.

18. A vehicle control method, comprising:
when a vehicle is in a maintenance mode, obtaining first notification information from a cloud or a head unit, wherein the first notification information indicates that use of an intelligent management function of a client is suspended, and the intelligent management function comprises at least one of the following: a remote control function, an alarm function, an audio-visual entertainment function, a personalized configuration function, or an image capture function; and
setting the intelligent management function to a suspended state based on the first notification information.

19. The method according to claim 18, wherein after the setting the intelligent management function to a suspended state, the method further comprises:
obtaining first application information from the head unit or the cloud, wherein the first application information indicates to enable the intelligent management function; and
setting the intelligent management function to an available state based on the first application information.

20. The method according to claim 18 or 19, wherein after the setting the intelligent management function to a suspended state, the method further comprises:
sending second application information to the head unit or the cloud, wherein the second application information indicates to enable the intelligent management function;
obtaining permission information from the head unit or the cloud, wherein the permission information corresponds to the second application information; and
setting the intelligent management function to the available state based on the permission information.

21. The method according to any one of claims 18 to 20, wherein after the setting the intelligent management function to a suspended state, the method further comprises:
when the vehicle exits the maintenance mode, obtaining second notification information from the cloud or the head unit, wherein the second notification information indicates to enable the intelligent management function of the client; and
setting the intelligent management function to the available state based on the second notification information.

22. A vehicle control system, comprising a head unit, wherein the head unit is configured to perform the method according to any one of claims 1 to 17.

23. The control system according to claim 22, wherein the control system further comprises a client, and the client is configured to perform the method according to any one of claims 18 to 21.

24. A vehicle control apparatus, comprising a processing unit and a transceiver unit, wherein
the transceiver unit is configured to perform an obtaining operation and a sending operation according to any one of claims 1 to 17; and
the processing unit is configured to perform an operation other than the obtaining operation and the sending operation according to any one of claims 1 to 17.

25. A control apparatus, comprising a processor and a memory, wherein
the processor stores instructions, and when the instructions are run on the processor, the method according to any one of claims 1 to 21 is implemented.

26. A computer-readable storage medium, wherein the computer-readable storage medium stores instructions, and when the instructions are run on a processor, the method according to any one of claims 1 to 21 is implemented.

27. A computer program product, wherein when the computer program product is executed on a processor, the method according to any one of claims 1 to 21 is implemented.
